# EUROPEAN PATENT APPLICATION

(11) **EP 4 628 264 A1**
(43) Date of publication of application: **08.10.2025**
(21) Application number: 23935014.3
(22) Date of filing: 14.11.2023
(51) Int. Cl.: B25J 9/16, B62D 57/00

(54) **METHOD AND APPARATUS FOR CONTROLLING MOBILE ROBOT, MOBILE ROBOT, AND STORAGE MEDIUM**

(30) Priority: 25.04.2023 CN 202310475906
(71) Applicant: Tencent Technology (Shenzhen) Company Limited, Shenzhen, Guangdong 518057 (CN)
(72) Inventor: LI, Jingchen, Shenzhen, Guangdong 518057 (CN); ZHANG, Yufeng, Shenzhen, Guangdong 518057 (CN); ZHANG, Dongsheng, Shenzhen, Guangdong 518057 (CN); LI, Xiong, Shenzhen, Guangdong 518057 (CN); WANG, Shuai, Shenzhen, Guangdong 518057 (CN); ZHOU, Qinqin, Shenzhen, Guangdong 518057 (CN); SHENG, Minhua, Shenzhen, Guangdong 518057 (CN)
(74) Representative: Gunzelmann, Rainer
(86) International application number: PCT/CN2023/131455
(87) International publication number: WO 2024/221846

(57) **Abstract**

This application relates to the field of robots, and discloses a method and an apparatus for controlling a mobile robot, a mobile robot, and a storage medium. The mobile robot includes a first swinging leg set and a second swinging leg set. At least one of the first swinging leg set and the second swinging leg set includes a plurality of swinging legs. The first swinging leg set and the second swinging leg set are arranged side by side, and a rotation axis of the first swinging leg set and a rotation axis of the second swinging leg set are located on a same vertical plane. The control method includes: controlling the mobile robot to be in an initial standing state (320); and controlling the mobile robot to transform from the initial standing state to a folded state characterized by the first swinging leg set and the second swinging leg set being positioned together horizontally (340). The above provides a method for folding a mobile robot, which can reduce a volume of the robot in a non-operating state.

## Description

### RELATED APPLICATION

This application claims priority to Chinese Patent Application No. 202310475906.8, filed on April 25, 2023 and entitled "METHOD AND APPARATUS FOR CONTROLLING MOBILE ROBOT, DEVICE, AND STORAGE MEDIUM", which is incorporated herein by reference in its entirety.

### FIELD OF THE TECHNOLOGY

This application relates to the field of robots, and in particular, to a method and an apparatus for controlling a mobile robot, a mobile robot, and a storage medium.

### BACKGROUND OF THE DISCLOSURE

To ensure higher operating performance of a robot, the robot is usually provided with a plurality of mechanical assemblies, such as robot legs, robot arms, and a torso structure. Generally, a robot provided with many mechanical assemblies has a large volume. Therefore, how to reduce a volume of a robot in a non-operating state becomes a technical problem that needs to be resolved urgently.

### SUMMARY

Embodiments of this application provide a method and an apparatus for controlling a mobile robot, a mobile robot, and a storage medium, which can reduce a volume of a robot in a non-operating state. The technical solutions include at least the following solutions.

According to an aspect of this application, a method for controlling a mobile robot is provided. The mobile robot includes a first swinging leg set and a second swinging leg set. At least one of the first swinging leg set and the second swinging leg set includes a plurality of swinging legs. The first swinging leg set and the second swinging leg set are arranged side by side, and a rotation axis of the first swinging leg set and a rotation axis of the second swinging leg set are located on the same vertical plane. The method includes:
controlling the mobile robot to be in an initial standing state; and
controlling the mobile robot to transform from the initial standing state to a folded state characterized by the first swinging leg set and the second swinging leg set being positioned together horizontally.

According to an aspect of this application, a method for controlling a mobile robot is provided. The mobile robot includes a first swinging leg set and a second swinging leg set. At least one of the first swinging leg set and the second swinging leg set includes a plurality of swinging legs. The first swinging leg set and the second swinging leg set are arranged side by side, and a rotation axis of the first swinging leg set and a rotation axis of the second swinging leg set are located on the same vertical plane. The method includes:
controlling the mobile robot to be in a folded state characterized by the first swinging leg set and the second swinging leg set being positioned together horizontally; and
controlling the mobile robot to transform from the folded state to a target standing state.

According to an aspect of this application, an apparatus for controlling a mobile robot is provided. The mobile robot includes a first swinging leg set and a second swinging leg set. At least one of the first swinging leg set and the second swinging leg set includes a plurality of swinging legs. The first swinging leg set and the second swinging leg set are arranged side by side, and a rotation axis of the first swinging leg set and a rotation axis of the second swinging leg set are located on the same vertical plane. The apparatus includes:
a control module, configured to control the mobile robot to be in an initial standing state,
the control module being further configured to control the mobile robot to transform from the initial standing state to a folded state characterized by the first swinging leg set and the second swinging leg set being positioned together horizontally.

According to an aspect of this application, an apparatus for controlling a mobile robot is provided. The mobile robot includes a first swinging leg set and a second swinging leg set. At least one of the first swinging leg set and the second swinging leg set includes a plurality of swinging legs. The plurality of first swinging leg sets and the plurality of second swinging leg sets are arranged side by side, and a rotation axis of the first swinging leg set and a rotation axis of the second swinging leg set are located on the same vertical plane. The apparatus includes:
a control module, configured to control the mobile robot to be in a folded state characterized by the first swinging leg set and the second swinging leg set being positioned together horizontally,
the control module being further configured to control the mobile robot to transform from the folded state into a target standing state.

According to an aspect of this application, a mobile robot is provided. The mobile robot includes a memory and a processor. The memory has at least one piece of program code stored therein, the program code is loaded and executed by the processor, to implement the foregoing method for controlling a mobile robot.

According to an aspect of this application, a computer-readable storage medium is provided, the storage medium having a computer program stored therein, the computer program being executed by a processor to implement the foregoing method for controlling a mobile robot.

According to an aspect of this application, a chip is provided, the chip including a programmable logic circuit and/or program instructions, an electronic device having the chip installed therein, when running, being configured to implement the foregoing method for controlling a mobile robot.

According to an aspect of this application, a computer program product is provided, including computer instructions stored in a computer-readable storage medium, a processor reading the computer instructions from the computer-readable storage medium and executing the computer instructions, to implement the foregoing method for controlling a mobile robot.

The technical solutions provided in the embodiments of this application have at least the following beneficial effects.

In an operating state, the first swinging leg set and the second swinging leg set of the mobile robot are arranged side by side and the rotation axes are located on the same vertical plane. In a non-operating state, the first swinging leg set and the second swinging leg set of the mobile robot are horizontally closed together, so that a volume of the mobile robot in the non-operating state can be reduced.

### BRIEF DESCRIPTION OF THE DRAWINGS

FIG. 1 is a side view of a mobile robot according to an exemplary embodiment of this application.
FIG. 2 is a side view of a mobile robot according to an exemplary embodiment of this application.
FIG. 3 is a flowchart of a method for controlling a mobile robot according to an exemplary embodiment of this application.
FIG. 4 is a schematic diagram of a method for controlling a mobile robot according to an exemplary embodiment of this application.
FIG. 5 is a flowchart of a method for controlling a mobile robot according to an exemplary embodiment of this application.
FIG. 6 is a schematic diagram of a method for controlling a mobile robot according to an exemplary embodiment of this application.
FIG. 7 is a flowchart of a method for controlling a mobile robot according to an exemplary embodiment of this application.
FIG. 8 is a schematic diagram of a method for controlling a mobile robot according to an exemplary embodiment of this application.
FIG. 9 is a schematic diagram of a sideway swinging state according to an exemplary embodiment of this application.
FIG. 10 is a schematic diagram of a sideway swinging state and a bent state according to an exemplary embodiment of this application.
FIG. 11 is a schematic diagram of a torso structure in a sideway swinging state and a bent state, with a motion arm being in a first extended state according to an exemplary embodiment of this application.
FIG. 12 is a flowchart of a method for controlling a mobile robot according to an exemplary embodiment of this application.
FIG. 13 is a schematic diagram of a method for controlling a mobile robot according to an exemplary embodiment of this application.
FIG. 14 is a flowchart of a method for controlling a mobile robot according to an exemplary embodiment of this application.
FIG. 15 is a schematic diagram of a method for controlling a mobile robot according to an exemplary embodiment of this application.
FIG. 16 is a flowchart of a method for controlling a mobile robot according to an exemplary embodiment of this application.
FIG. 17 is a schematic diagram of a method for controlling a mobile robot according to an exemplary embodiment of this application.
FIG. 18 is a flowchart of a method for controlling a mobile robot according to an exemplary embodiment of this application.
FIG. 19 is a schematic diagram of a method for controlling a mobile robot according to an exemplary embodiment of this application.
FIG. 20 is a flowchart of a method for controlling a mobile robot according to an exemplary embodiment of this application.
FIG. 21 is a schematic diagram of a method for controlling a mobile robot according to an exemplary embodiment of this application.
FIG. 22 is a flowchart of a method for controlling a mobile robot according to an exemplary embodiment of this application.
FIG. 23 is a schematic diagram of a method for controlling a mobile robot according to an exemplary embodiment of this application.
FIG. 24 is a flowchart of a method for controlling a mobile robot according to an exemplary embodiment of this application.
FIG. 25 is a flowchart of a method for controlling a mobile robot according to an exemplary embodiment of this application.
FIG. 26 is a schematic diagram of a method for controlling a mobile robot according to an exemplary embodiment of this application.
FIG. 27 is a flowchart of a method for controlling a mobile robot according to an exemplary embodiment of this application.
FIG. 28 is a schematic diagram of a method for controlling a mobile robot according to an exemplary embodiment of this application.
FIG. 29 is a schematic diagram of an apparatus for controlling a mobile robot according to an exemplary embodiment of this application.
FIG. 30 is a schematic diagram of an apparatus for controlling a mobile robot according to an exemplary embodiment of this application.
FIG. 31 is a block diagram of a mobile robot according to an exemplary embodiment of this application.

### DESCRIPTION OF EMBODIMENTS

First, a structure of a mobile robot involved in this application is described.

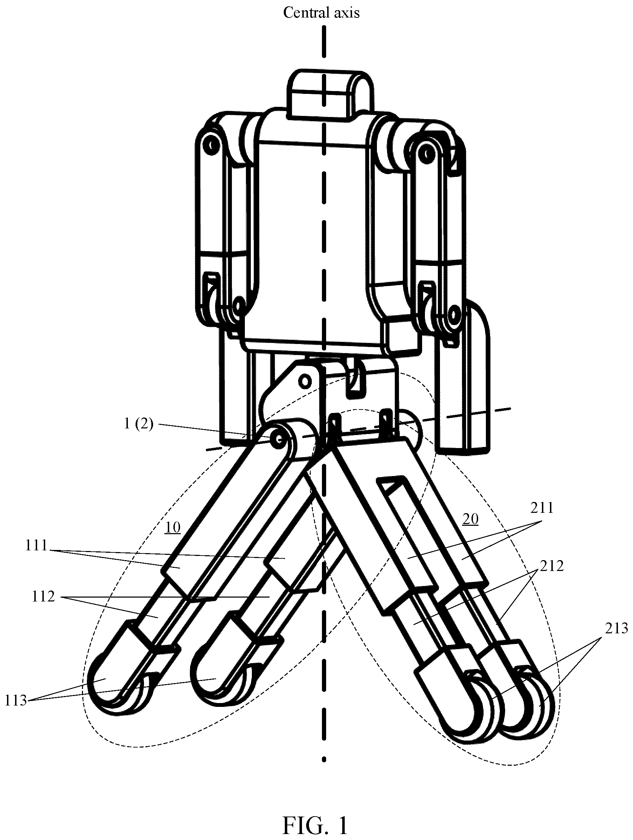

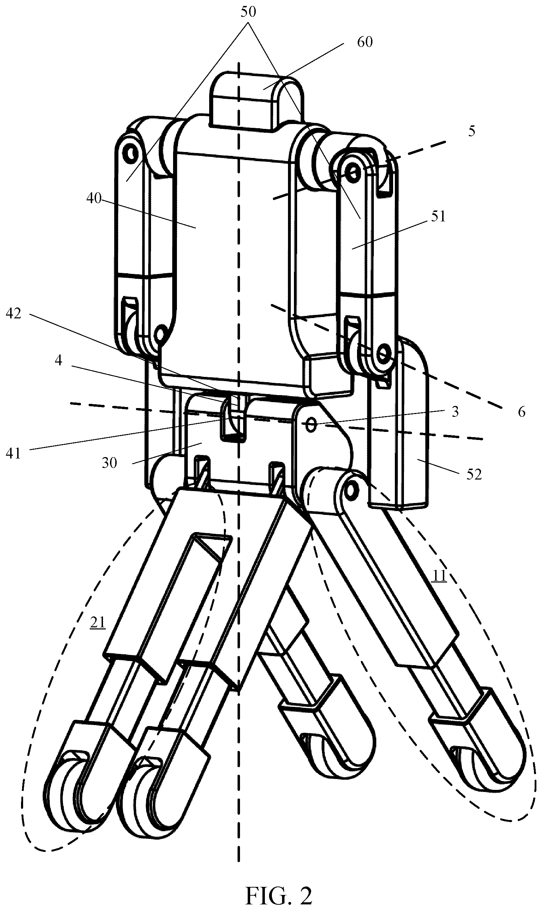

With reference to FIG. 1 and FIG. 2, it may be observed that the mobile robot provided in this application includes at least three swinging legs. The at least three swinging legs are arranged side by side and rotation axes are located on the same vertical plane. Arranged side by side is a state in which projections of the at least three swinging legs of the mobile robot in a first direction do not overlap. That the rotation axes are located on the same vertical plane refers to a state in which projections of the at least three swinging legs of the mobile robot in a second direction do not overlap. The first direction refers to an orientation of a front side or a back side of the mobile robot. The second direction refers to an orientation of a lateral side of the mobile robot. In some embodiments, rotation axes of at least two of the at least three swinging legs are coaxial. In some embodiments, rotation axes of the at least three swinging legs are not coaxial.

In an embodiment, the at least three swinging legs are divided to a first swinging leg set and a second swinging leg set. In some embodiments, the first swinging leg set includes a plurality of first swinging legs, the second swinging leg set includes one second swinging leg, at least two first swinging legs of the plurality of first swinging legs are respectively located on two sides of a central axis of the mobile robot, and the second swinging leg is located on the central axis of the mobile robot. In some embodiments, the first swinging leg set includes one first swinging leg, the second swinging leg set includes a plurality of second swinging legs, at least two second swinging legs of the plurality of second swinging legs are respectively located on two sides of a central axis of the mobile robot, and the first swinging leg is located on the central axis of the mobile robot.

In an embodiment, the at least three swinging legs are divided to a first swinging leg set and a second swinging leg set. In some embodiments, the first swinging leg set includes a plurality of first swinging legs, the second swinging leg set includes a plurality of second swinging legs, and the plurality means greater than or equal to two.

With reference to FIG. 1 and FIG. 2, FIG. 1 and FIG. 2 are side views of a mobile robot according to this application. The mobile robot includes a first swinging leg set 10 and a second swinging leg set 20. The first swinging leg set 10 includes a plurality of first swinging legs 11, and the second swinging leg set 20 includes a plurality of second swinging legs 21. At least two of the plurality of first swinging legs 11 are respectively located on two sides of a central axis of the mobile robot, and at least two of the plurality of second swinging legs 21 are respectively located on the two sides of the central axis of the mobile robot. The plurality of first swinging legs 11 and the plurality of second swinging legs 21 are distributed side by side. In a case that the foregoing distribution condition is satisfied, further, in some embodiments, the plurality of first swinging legs 11 and the plurality of second swinging legs 21 are alternately distributed one by one. In some embodiments, the plurality of first swinging legs 11 are distributed on two sides of the plurality of second swinging legs 21.

Exemplarily, an example in which the first swinging leg set 10 is a leg set A, and the second swinging leg set 20 is a leg set B. The plurality of first swinging legs 11 and the plurality of second swinging legs 21 may be distributed side by side as follows: A1, B1, B2, and A2 (a distribution case 1), A1, B1, A2, and B2 (a distribution case 2), A1, A2, B1, A3, B2, and B3 (a distribution case 3), A1, A2, B1, B2, B3, and A3 (a distribution case 4), or the like. Likewise, more or fewer swinging legs may be arranged side by side in a similar manner.

With reference to FIG. 1 and FIG. 2, FIG. 1 and FIG. 2 show that the first swinging leg set 10 includes two first swinging legs (outer legs) 11, and the second swinging leg set 20 includes two second swinging legs (inner legs) 21. The two first swinging legs 11 are symmetrically distributed along the central axis of the mobile robot, and the two second swinging legs 21 are symmetrically distributed along the central axis of the mobile robot. A distance between each of the first swinging legs 11 and the central axis is greater than a distance between each of the second swinging legs 21 and the central axis.

During travelling of the mobile robot, the first swinging leg set 10 and the second swinging leg set 20 may travel with crossed steps. In other words, the first swinging leg set 10 and the second swinging leg set 20 travel alternately in a front-rear direction. In an exemplary travelling process, the second swinging leg set 20 is swung to a first stop point by using the first swinging leg set 10 as support legs, and then the first swinging leg set 10 is swung to a second stop point by using the second swinging leg set 20 as support legs.

Specifically, in an initial posture, the plurality of first swinging legs 11 serve as front legs and are in contact with the ground, and the plurality of second swinging legs 21 serve as rear legs and are in contact with the ground. In this case, a projection of a center of gravity of the robot is located between geometric figures formed by contact points of the front and rear legs and the ground. The plurality of second swinging legs 21 are swung to the first stop point by using the plurality of first swinging legs 11 as support legs, and at the same time, the center of gravity of the robot is controlled to move forward. After the plurality of second swinging legs 21 are swung to the first stop point, the center of gravity of the robot is controlled to be located between the geometric figures formed by the contact points of the front and rear legs and the ground again. The plurality of first swinging legs 11 are swung to the second stop point by using the plurality of second swinging legs 21 as support legs, and at the same time, the center of gravity of the robot is controlled to move forward. After the plurality of second swinging legs 21 are swung to the second stop point, the center of gravity of the robot is controlled to be located between the geometric figures formed by the contact points of the front and rear legs and the ground again.

During the swinging of the swinging legs of the robot, the swinging legs are controlled to stretch or retract. Exemplarily, in a case that centers of gravity of the swinging legs are located behind the center of gravity of the mobile robot, the swinging legs are controlled to contract. In a case that the centers of gravity of the swinging legs are located before the center of gravity of the mobile robot, the swinging legs are controlled to stretch.

According to the foregoing mobile robot, the first swinging leg set and the second swinging leg set are arranged, the first swinging leg set includes a plurality of first swinging legs, the second swinging leg set includes a plurality of second swinging legs, at least two of the plurality of first swinging legs are respectively located on the two sides of the central axis of the mobile robot, and at least two of the plurality of second swinging legs are respectively located on the two sides of the central axis of the mobile robot, and the plurality of first swinging legs and the plurality of second swinging legs are distributed side by side. In this way, static stability of the mobile robot in a standing posture can be achieved, and a position of the center of gravity of the mobile robot does not need to be dynamically adjusted. In addition, the foregoing mobile robot can travel with crossed steps. Therefore, during the travelling, the mobile robot does not have a problem regarding balance in a rolling direction. The rolling direction is a direction perpendicular to a travelling direction.

In an embodiment, the plurality of first swinging legs 11 are rotatably connected to a first swinging rotation axis, and the first swinging rotation axis is perpendicular to a travelling direction of the mobile robot. In some embodiments, the first swinging rotation axis is located at a position such as a hip, a waist, or a head top of the mobile robot. In an embodiment, the plurality of second swinging legs 21 are rotatably connected to a second swinging rotation axis, and the second swinging rotation axis is perpendicular to the travelling direction of the mobile robot. In some embodiments, the second swinging rotation axis is located at a position such as a hip, a waist, or a head top of the mobile robot.

In an embodiment, the first swinging rotation axis is located at a hip of the mobile robot. With reference to FIG. 1, in this case, the first swinging rotation axis is a first hip rotation axis 1. When the mobile robot stands on a horizontal reference plane, the first hip rotation axis 1 extends horizontally. The plurality of first swinging legs 11 are rotatably connected to the first hip rotation axis 1, and any two of the plurality of first swinging legs 11 are parallel.

In an embodiment, the second swinging rotation axis is located at a hip of the mobile robot. With reference to FIG. 1, in this case, the second swinging rotation axis is a second hip rotation axis 2, and when the mobile robot stands on a horizontal reference plane, the second hip rotation axis 2 extends horizontally. The plurality of second swinging legs 21 are rotatably connected to the second hip rotation axis 2, and any two of the plurality of second swinging legs 21 are parallel.

In some embodiments, the first hip rotation axis 1 and the second hip rotation axis 2 are coaxial. FIG. 1 and FIG. 2 show a case in which the first hip rotation axis 1 and the second hip rotation axis 2 are coaxial and in the same vertical plane.

In an embodiment, the mobile robot further includes a first rotating motor and a second rotating motor. The first rotating motor is configured to drive the plurality of first swinging legs 11 in the first swinging leg set 10 to interactively rotate about the first hip rotation axis 1. The second rotating motor is configured to drive the plurality of second swinging legs 21 in the second swinging leg set 20 to interactively rotate about the second hip rotation axis 2.

In an embodiment, the mobile robot further includes a third rotating motor corresponding to the first swinging leg 11 and a fourth rotating motor corresponding to the second swinging leg 21. The third rotating motor is configured to drive the first swinging leg 11 to rotate about the first hip rotation axis 1. The fourth rotating motor is configured to drive the second swinging leg 21 to rotate about the second hip rotation axis 2. In some embodiments, the plurality of third rotating motors respectively corresponding to the plurality of first swinging legs 11 can control the plurality of first swinging legs 11 to rotate associatively or independently. In some embodiments, the plurality of fourth rotating motors respectively corresponding to the plurality of second swinging legs 21 can control the plurality of second swinging legs 21 to rotate associatively or independently.

With reference to FIG. 1 and FIG. 2, the first swinging leg 11 includes a first robotic thigh 111 and a first robotic calf 112. The first robotic thigh 111 is connected to the first robotic calf 112 through sleeving. In some embodiments, in the sleeved state, the first robotic thigh 111 is nested inside the first robotic calf 112. During stretching or retraction, the first robotic thigh 111 is stretched or retracted in a sleeving direction. In some embodiments, in the sleeved state, the first robotic calf 112 is nested inside first robotic thigh 111. During stretching or retraction, the first robotic calf 112 is stretched or retracted in the sleeving direction (a case shown in FIG. 1 and FIG. 2). In some embodiments, in the sleeved state, the first robotic thigh 111 and the first robotic calf 112 are nested inside the intermediate piece. During stretching or retraction, the first robotic thigh 111 and the first robotic calf 112 are stretched or retracted in the sleeving direction.

The second swinging leg 21 includes a second robotic thigh 211 and a second robotic calf 212. The second robotic thigh 211 is connected to the second robotic calf 212 through sleeving. In some embodiments, in the sleeved state, the second robotic thigh 211 is nested inside the second robotic calf 212. During stretching or retraction, the second robotic thigh 211 is stretched or retracted in a sleeving direction. In some embodiments, in the sleeved state, the second robotic calf 212 is nested inside the second robotic thigh 211. During stretching or retraction, the second robotic calf 212 is stretched or retracted in the sleeving direction (a case shown in FIG. 1 and FIG. 2). In some embodiments, in the sleeved state, the second robotic thigh 211 and the second robotic calf 212 are nested inside the intermediate piece. During stretching or retraction, the second robotic thigh 211 and the second robotic calf 212 are stretched or retracted in the sleeving direction.

In an embodiment, the mobile robot further includes a first stretching and retraction motor corresponding to the first swinging leg 11 and a second stretching and retraction motor corresponding to the second swinging leg 21. The first stretching and retraction motor is configured to drive the first swinging leg 11 to stretch or retract in the sleeving direction. The second stretching and retraction motor is configured to drive the second swinging leg 21 to stretch or retract in the sleeving direction. In some embodiments, the first stretching and retraction motor is a first linear motor. In some embodiments, the first stretching and retraction motor is a motor designed to implement linear transmission through a screw nut. In some embodiments, the second stretching and retraction motor is a second linear motor. In some embodiments, the second stretching and retraction motor is a motor designed to implement linear transmission through the screw nut.

In an embodiment, a plurality of first stretching and retraction motors respectively corresponding to the plurality of first swinging legs 11 can control the plurality of first swinging legs 11 to stretch or retract associatively or independently. In some embodiments, a plurality of second stretching and retraction motors respectively corresponding to the plurality of second swinging legs 21 can control the plurality of second swinging legs 21 to stretch or retract associatively or independently.

In an embodiment, the first swinging leg 11 includes the first robotic thigh 111 and the first robotic calf 112. The first robotic thigh 111 and the first robotic calf 112 are in a rotation connection through a first knee joint rotation axis. The first knee joint rotation axis supports increasing or decreasing an included angle between the first robotic thigh 111 and the first robotic calf 112. The second swinging leg 21 includes the second robotic thigh 211 and the second robotic calf 212. The second robotic thigh 211 and the second robotic calf 212 are in a rotation connection through a second knee joint rotation axis. The second knee joint rotation axis supports increasing or decreasing an included angle between the second robotic thigh 211 and the second robotic calf 212.

In an embodiment, the first swinging leg set 10 includes the plurality of first swinging legs 11. Each of the first swinging legs 11 includes a first leg assembly and a first wheel 113 located on an end of the first leg assembly. The second swinging leg set 20 includes the plurality of second swinging legs 21. The second swinging leg 21 includes a second leg assembly and a second wheel 213 located on an end of the second leg assembly. In some embodiments, the first wheel 113 is a wheel having a multi-directional degree of freedom. The first wheel 113 supports rotation in any direction. In some embodiments, the second wheel 213 is a wheel having a multi-directional degree of freedom, and the second wheel 213 supports rotation in any direction. With reference to FIG. 1 and FIG. 2, the foregoing first leg assembly includes the first robotic thigh 111 and the first robotic calf 112. The foregoing second leg assembly includes the second robotic thigh 211 and the second robotic calf 212.

In an embodiment, the mobile robot further includes a first driving motor corresponding to the first wheel 113 and a second driving motor corresponding to the second wheel 213. The first driving motor is configured to drive the first wheel 113 to rotate. The second driving motor is configured to drive the second wheel 213 to rotate.

In an embodiment, a plurality of first driving motor respectively corresponding to the plurality of first swinging legs 11 can control the plurality of first wheel 113 to rotate associatively or independently. In some embodiments, a plurality of second driving motor respectively corresponding to the plurality of second swinging legs 21 can control the plurality of second wheel 213 to rotate associatively or independently.

In an embodiment, the mobile robot further includes a waist structure 30 and a torso structure 40. The waist structure 30 is configured to connect a leg structure and the torso structure 40. The leg structure includes the first swinging leg set 10 and the second swinging leg set 20.

In an embodiment, the waist structure 30 includes a pitch rotation axis 3. The pitch rotation axis 3 is parallel to a rotation axis of the first swinging leg set 10, and/or the pitch rotation axis 3 is parallel to a rotation axis of the second swinging leg set 20. Exemplarily, with reference to FIG. 1 and FIG. 2, the pitch rotation axis 3 is parallel to the first hip rotation axis 1 (to the second hip rotation axis 2). The pitch rotation axis 3 is rotatably connected to the torso structure 40. The pitch rotation axis 3 is configured to support the torso structure 40 to perform a pitching operation.

In an embodiment, the waist structure 30 includes a sideway swinging rotation axis 4. The sideway swinging rotation axis 4 is perpendicular to the rotation axis of the first swinging leg set 10, and/or the sideway swinging rotation axis 4 is perpendicular to the rotation axis of the second swinging leg set 20. With reference to FIG. 1 and FIG. 2, the sideway swinging rotation axis 4 is perpendicular to the first hip rotation axis 1 (to the second hip rotation axis 2). The sideway swinging rotation axis 4 is rotatably connected to the torso structure 40, and. The sideway swinging rotation axis 4 is configured to support the torso structure 40 to perform a side swing operation.

In an embodiment, the waist structure 30 includes the pitch rotation axis 3 and the sideway swinging rotation axis 4. The pitch rotation axis 3 is parallel to a rotation axis of the first swinging leg set 10, and/or the pitch rotation axis 3 is parallel to a rotation axis of the second swinging leg set 20. With reference to FIG. 1 and FIG. 2, the pitch rotation axis 3 is parallel to the first hip rotation axis 1 (to the second hip rotation axis 2). The pitch rotation axis 3 is configured to support the torso structure 40 to perform the pitching operation. The sideway swinging rotation axis 4 is perpendicular to the pitch rotation axis 3. A first end 41 of the sideway swinging rotation axis 4 is connected to a center of the pitch rotation axis 3, a second end 42 of the sideway swinging rotation axis 4 is connected to the torso structure 40, and the sideway swinging rotation axis 4 is configured to support the torso structure 40 to perform the side swing operation.

In an embodiment, the mobile robot further has at least one motion arm 50. With reference to FIG. 1 and FIG. 2, FIG. 1 and FIG. 2 show that the mobile robot has two motion arms 50. The two motion arms 50 are symmetrically distributed along a central axis of the robot.

In some embodiments, the motion arm 50 is connected to a shoulder rotation axis 5 of the mobile robot. The shoulder rotation axis 5 is configured to support the motion arm 50 to have a multi-directional rotation degree of freedom. In some embodiments, the shoulder rotation axis 5 supports the motion arm 50 to rotate within a rotation angle range allowed by a structure of the robot. In an embodiment, the mobile robot further includes a shoulder driving motor corresponding to the shoulder rotation axis 5. The shoulder driving motor is configured to drive the motion arm 50 to rotate. In an embodiment, a plurality of shoulder driving motor respectively corresponding to a plurality of shoulder rotation axes 5 can control a plurality of motion arms 50 to rotate associatively or independently.

In some embodiments, the motion arm 50 includes a robotic upper arm 51 and a robotic forearm 52. The robotic upper arm 51 and the robotic forearm 52 are connected through an elbow joint rotation axis 6. The elbow joint rotation axis 6 is configured to support the robotic forearm 52 to have a multi-directional rotation degree of freedom. In some embodiments, the elbow joint rotation axis 6 supports the robotic forearm 52 to rotate within a rotation angle range allowed by the structure of the robot. In an embodiment, the mobile robot further includes an elbow joint driving motor corresponding to the elbow joint rotation axis 6. The wrist joint driving motor is configured to drive the robotic forearm 52 to rotate. In an embodiment, a plurality of wrist joint driving motors respectively corresponding to a plurality of elbow joint rotation axes 6 can control a plurality of robotic forearms 52 to rotate associatively or independently.

In an embodiment, a claw is connected to an end of the robotic forearm 52. In an embodiment, the mobile robot further has a head 60. The head 60 is located above the torso structure 40.

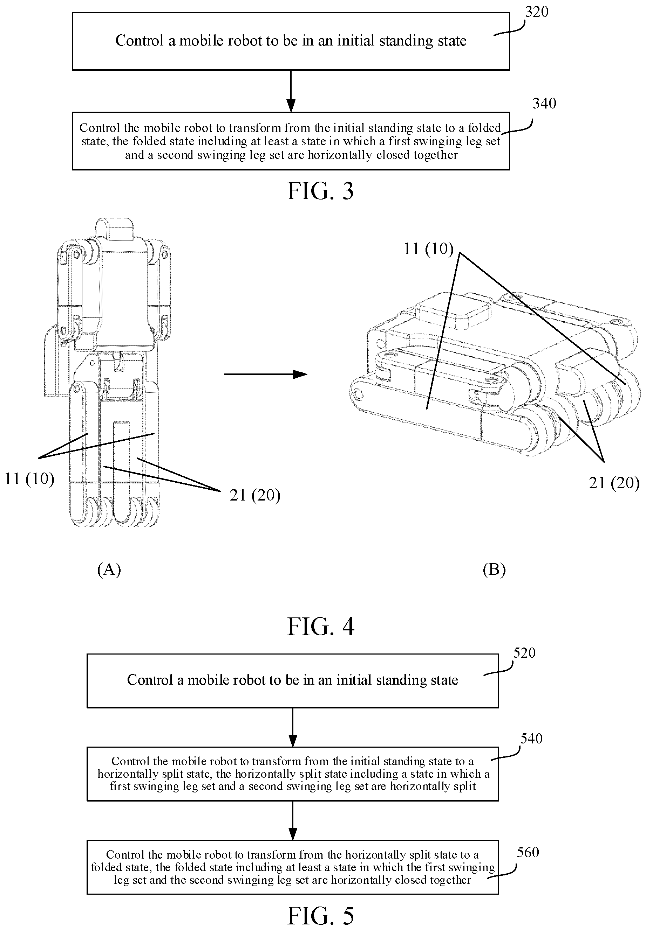

FIG. 3 is a flowchart of a method for controlling a mobile robot according to an exemplary embodiment of this application. Specifically, the control method shown in FIG. 3 is performed by a controller of the mobile robot. The controller of the mobile robot may be located in a body of the robot or outside the robot. The method includes the following operations.

Operation 320: Control the mobile robot to be in an initial standing state.

In this embodiment of this application, the mobile robot includes a first swinging leg set and a second swinging leg set. The first swinging leg set includes a plurality of first swinging legs and/or the second swinging leg set includes a plurality of second swinging legs. The first swinging leg set and the second swinging leg set are arranged side by side, and a rotation axis of the first swinging leg set and a rotation axis of the second swinging leg set are located on the same vertical plane. At least one of the first swinging leg set and the second swinging leg set includes a plurality of swinging legs. In some embodiments, the first swinging leg set includes the plurality of first swinging legs, and the second swinging leg set includes one second swinging leg. In some embodiments, the first swinging leg set includes one first swinging leg, and the second swinging leg set includes the plurality of second swinging legs. In some embodiments, the first swinging leg set includes the plurality of first swinging legs, and the second swinging leg set includes the plurality of second swinging legs. In some embodiments, the plurality of first swinging legs and the plurality of second swinging legs are alternately distributed one by one. In some embodiments, the plurality of first swinging legs are distributed on two sides of the plurality of second swinging legs.

The initial standing state is an initial reference state in which the mobile robot executes a folding action method shown in FIG. 3. In other words, before performing a subsequent folding action, the mobile robot needs to be in the initial standing state.

In an embodiment, the initial standing state includes a state in which the first swinging leg set and the second swinging leg set of the mobile robot are closed together and jointly stand for support. Specifically, closed together in the initial standing state means that sides of the first swinging leg set are attached to (or face) sides of the second swinging leg set in the standing state, or closed together in the initial standing state means that an included angle does not exist between a vertical axis of the first swinging leg set and a vertical axis of the second swinging leg set in the standing state.

In an embodiment, the initial standing state includes a state in which the first swinging leg set and the second swinging leg set of the mobile robot are closed together and only one swinging leg set stands for support. In some embodiments, the leg set supporting for support is the first swinging leg set or the second swinging leg set. Specifically, closed together in the initial standing state means that sides of the first swinging leg set are attached to (or face) sides of the second swinging leg set in the standing state, or closed together in the initial standing state means that an included angle does not exist between a vertical axis of the first swinging leg set and a vertical axis of the second swinging leg set in the standing state.

In an embodiment, the initial standing state includes a state in which the first swinging leg set and the second swinging leg set of the mobile robot stand with legs crossed. In some embodiments, in the state of standing with legs crossed, the first swinging leg set is located before or behind the second swinging leg set.

With reference to FIG. 4, part (A) of FIG. 4 shows a schematic diagram in which an initial standing state is a state in which a first swinging leg set 10 and a second swinging leg set 20 of a mobile robot are closed together and jointly stand for support. FIG. 4 shows that the first swinging leg set 10 is located on an outer side of the second swinging leg set 20. A plurality of first swinging legs 11 of the first swinging leg set 10 are symmetrically distributed along a central axis of the mobile robot, and a plurality of second swinging legs 21 of the second swinging leg set 20 are symmetrically distributed along a central axis of the mobile robot. A distance between any first swinging leg 11 and the central axis of the mobile robot is greater than a distance between any second swinging leg 21 and the central axis of the mobile robot. FIG. 4 includes two first swinging legs 11 and two second swinging legs 21.

**Operation 340:** Control the mobile robot to transform from the initial standing state to a folded state characterized by the first swinging leg set and the second swinging leg set being positioned together horizontally. In embodiments of the present application, operation 340 may include following steps: control the mobile robot to transform from the initial standing state to a folded state, the folded state including at least a state in which the first swinging leg set and the second swinging leg set are horizontally closed together.

The folded state refers to a state in which the mobile robot is in a non-operating mode. A space volume occupied by the robot in the non-operating mode is smaller than a space volume occupied by the robot in an operating mode. The folded state is a state obtained by the robot by performing the folding action in the initial standing state.

The folded state including at least a state in which the first swinging leg set and the second swinging leg set are horizontally closed together. Horizontally closed together means that extending directions of the first swinging leg set and the second swinging leg set are parallel to a horizontal reference plane and the sides of the first swinging leg set is attached to (or face) the sides of the second swinging leg set. Alternatively, horizontally closed together means that extending directions of the first swinging leg set and the second swinging leg set are parallel to the horizontal reference plane, and an included angle does not exist between a horizontal axis of the first swinging leg set and a horizontal axis of the second swinging leg set.

In some embodiments, the mobile robot further includes a torso structure. The folded state further includes a state in which the torso structure is attached to the first swinging leg set and/or the second swinging leg set after being folded. In this case, a front side or a back side of the torso structure is attached to a top side of the first swinging leg set and/or the second swinging leg set. With reference to FIG. 4, part (B) of FIG. 4 shows a mobile robot in a folded state. Part (B) of FIG. 4 shows a state in which the first swinging leg set 10 and the second swinging leg set 20 are horizontally closed together, and a front side of a torso structure is attached to top sides of the first swinging leg set 10 and the second swinging leg set 20.

Based on the above, in the operating state, the first swinging leg set and the second swinging leg set of the mobile robot are arranged side by side. In a non-operating state, the first swinging leg set and the second swinging leg set of the mobile robot are horizontally closed together, so that a volume of the mobile robot in the non-operating state can be reduced.

FIG. 5 is a flowchart of a method for controlling a mobile robot according to an exemplary embodiment of this application. Specifically, the control method shown in FIG. 5 is performed by a controller of the mobile robot. The controller of the mobile robot may be located in a body of the robot or outside the robot. The method includes the following operations.

**Operation 520:** Control the mobile robot to be in an initial standing state.

The initial standing state is an initial reference state in which the mobile robot executes a folding action method shown in FIG. 5. In other words, before performing a subsequent folding action, the mobile robot needs to be in the initial standing state.

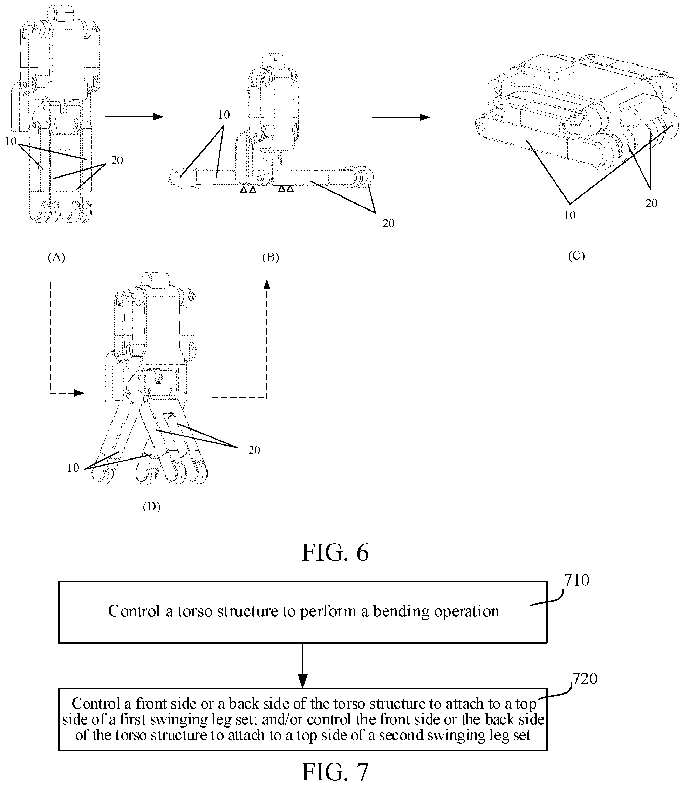

With reference to FIG. 6, part (A) of FIG. 6 shows a schematic diagram in which an initial standing state is a state in which a first swinging leg set 10 and a second swinging leg set 20 of a mobile robot are closed together and jointly stand for support.

**Operation 540:** Control the mobile robot to transform from the initial standing state to a horizontally split state, the horizontally split state including a state in which the first swinging leg set and the second swinging leg set are horizontally split.

The horizontally split state is a state in which an extending direction of the first swinging leg set is opposite to an extending direction of the second swinging leg set. Specifically, in the horizontally split state, an included angle of 180 degrees exists between a direction from a leg root to a leg end of the first swinging leg set and a direction from the leg root to a leg end of the second swinging leg set. With reference to FIG. 6, part (B) of FIG. 6 shows that the first swinging leg set 10 and the second swinging leg set 20 are in a horizontally split state.

In an embodiment, the mobile robot is controlled to perform a splitting action in the initial standing state, until the mobile robot is in the horizontally split state. The splitting action is an action of gradually increasing an included angle between the first swinging leg set and the second swinging leg set. In an embodiment, the splitting action is an action of simultaneously controlling the first swinging leg set and the second swinging leg set to rotate in opposite directions. In some embodiments, the first swinging leg set is controlled to rotate clockwise along the hip rotation axis, and the second swinging leg set is controlled to rotate counterclockwise along the hip rotation axis. In some embodiments, the first swinging leg set is controlled to rotate counterclockwise along the hip rotation axis, and the second swinging leg set is controlled to rotate clockwise along the hip rotation axis.

In an embodiment, the splitting action is an action of controlling rotation of only one swinging leg set. In some embodiments, the first swinging leg set or the second swinging leg set is controlled to rotate clockwise along the hip rotation axis. In some embodiments, the first swinging leg set or the second swinging leg set is controlled to rotate counterclockwise along the hip rotation axis.

Part (D) of FIG. 6 shows an intermediate state in which the mobile robot performs a splitting action to reach a horizontally split state. In this case, an included angle exists between a first swinging leg set 10 and a second swinging leg set 20. A splitting action corresponding to part (D) of FIG. 6 is an action of simultaneously controlling the first swinging leg set 10 and the second swinging leg set 20 to rotate in opposite directions.

In an embodiment, a first swinging leg includes a first leg and a first wheel located on an end of the first leg, and a second swinging leg includes a second leg and a second wheel located on an end of the second leg. A first protrusion is arranged at a root of the first leg, and a second protrusion is arranged at a root of the second leg.

After operation 540, the method further includes: determining a plurality of first wheels and a plurality of first protrusions respectively corresponding to the plurality of first swinging legs and a plurality of second wheels and a plurality of second protrusions respectively corresponding to the plurality of second swinging legs as a support portion of the mobile robot in the horizontally split state; and controlling the mobile robot to be in the horizontally split state. A position of the protrusion is represented by using a "triangle" in part (B) of FIG. 6.

**Operation 560:** Control the mobile robot to transform from the horizontally split state to a folded state, the folded state including at least a state in which the first swinging leg set and the second swinging leg set are horizontally closed together.

In an embodiment, the first swinging leg set or the second swinging leg set of the mobile robot is controlled to perform a leg rotation action about a hip rotation axis until the first swinging leg set and the second swinging leg set are horizontally closed together. Specifically, the first swinging leg set is controlled to perform the leg rotation action about the hip rotation axis by using the second swinging leg set as support legs in the horizontally split state, until the first swinging leg set and the second swinging leg set are horizontally closed together. When the leg rotation action is performed about the hip rotation axis, the first swinging leg set transforms in height.

Alternatively, the second swinging leg set is controlled to perform the leg rotation action about the hip rotation axis by using the first swinging leg set as support legs in the horizontally split state, until the first swinging leg set and the second swinging leg set are horizontally closed together. When the leg rotation action is performed about the hip rotation axis, the second swinging leg set transforms in height.

In some embodiments, the mobile robot further includes the torso structure. The folded state further includes a state in which a front side or a back side of the torso structure is attached to the first swinging leg set and/or the second swinging leg set after being folded. In this case, the front side or the back side of the torso structure is oriented perpendicular to an extending direction of the first swinging leg set and/or the second swinging leg set. With reference to FIG. 6, part (C) of FIG. 6 shows a mobile robot in a folded state. In this case, the first swinging leg set 10 and the second swinging leg set 20 are horizontally closed together. A front side of the torso structure is attached to top sides of the first swinging leg set 10 and the second swinging leg set 20.

Based on the above, a folding method is provided by controlling the mobile robot to be transformed from the initial standing state to the horizontally split state, and then controlling the mobile robot to be transformed from the horizontally split state to the horizontally closed state. In addition, transformation of the robot from the initial standing state to the horizontally split state is implemented through the splitting action, which provides a self-folding method of the robot. In a process of implementing a complete folding operation, the robot does not need to be assisted by an external force, such as manpower, and the robot is always in a stable state in a folding process.

Based on the exemplary embodiment shown in FIG. 5, if the mobile robot further includes the torso structure, the mobile robot further needs to perform an action of folding the torso structure. Operation 560 further includes operations shown in FIG. 7 in addition to "controlling the first swinging leg set or the second swinging leg set of the mobile robot to perform a leg rotation action about the hip rotation axis until the first swinging leg set and the second swinging leg set are horizontally closed together". Operations in FIG. 7 may be performed before the robot performs the leg rotation action, or may be performed after the robot performs the leg rotation action. The method shown in FIG. 7 includes the following operations.

**Operation 710:** Control the torso structure to perform a bending operation.

The torso structure is controlled to perform the bending operation through a pitch rotation axis.

In an embodiment, before the folding operation on the torso structure is performed, the torso structure needs to be controlled to be in an initial upright state. The initial upright state is a reference upright state of the torso structure. Before the folding operation is performed on the torso structure, the initial upright state needs to be restored to a reference upright state. In some embodiments, in the initial upright state, an orientation of a front side of the torso structure is parallel to an extending direction of the first swinging leg set in the horizontally split state, and/or an orientation of a front side of the torso structure is parallel to an extending direction of the second swinging leg set in the horizontally split state. Alternatively, in the initial upright state, a central axis of the torso structure is parallel to a gravity direction.

In an embodiment, before the folding operation on the torso structure is performed, the torso structure does not need to be controlled to be in a preset upright state, and the bending operation is performed by detecting a bending inclination angle of the torso structure. For example, before the folding operation is performed, the central axis of the torso structure of the mobile robot has an included angle with the gravity direction, and the bending operation is directly performed based on the included angle.

**Operation 720:** Control the front side or the back side of the torso structure to attach to a top side of the first swinging leg set; and/or control the front side or the back side of the torso structure to attach to a top side of the second swinging leg set.

The bending operation is performed until the front side or the back side of the torso structure attaches to the top side of the first swinging leg set, and it is determined that the torso structure completes the folding operation. In this case, an orientation of the front side or the back side of the torso structure in an attaching state is perpendicular to an extending direction of the first swinging leg set in the horizontally split state; and/or the bending operation is performed until the front side or the back side of the torso structure is attached to the top side of the second swinging leg set, and it is determined that the torso structure completes the folding operation. In this case, in the attaching state, an orientation of the front side or the back side of the torso structure in an attaching state is perpendicular to an extending direction of the second swinging leg set in the horizontally split state.

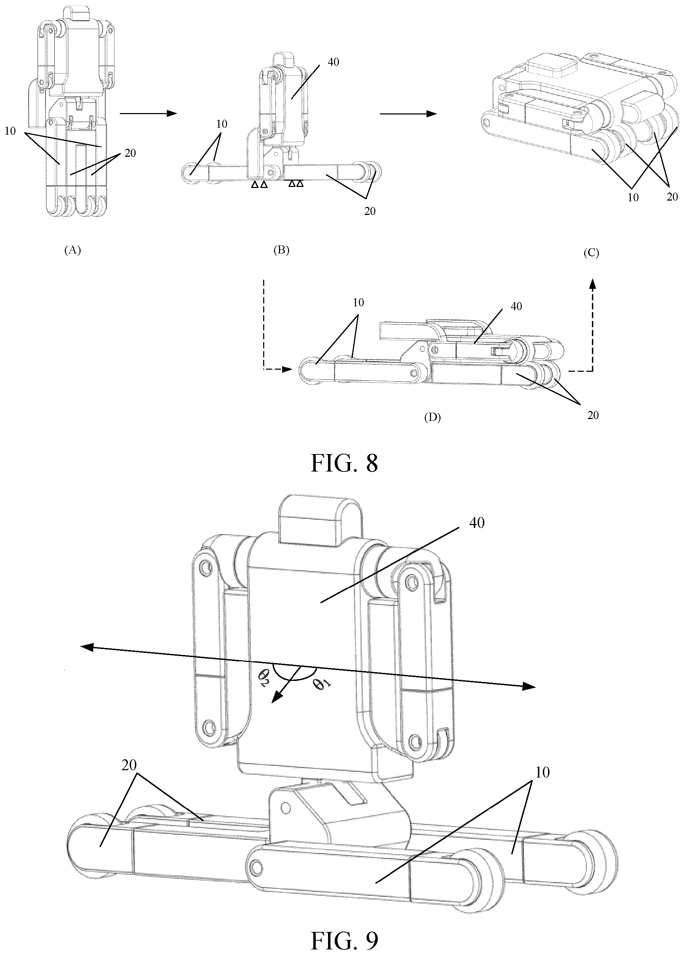

With reference to FIG. 8, FIG. 8 shows a case in which a mobile robot first performs a folding operation on a torso structure before a leg rotation action is performed. Part (A) of FIG. 8, part (B) of FIG. 8, and part (C) of FIG. 8 respectively correspond to part (A) of FIG. 6, part (B) of FIG. 6, and part (C) of FIG. 6 that are introduced in FIG. 6. Details are not described herein again. Part (D) of FIG. 8 is a schematic diagram showing that a torso structure maintains being folded. In this case, a front side of a torso structure 40 is attached to a top side of a second swinging leg set 20.

Based on the exemplary embodiment shown in FIG. 7, the method in FIG. 7 may be performed before the mobile robot performs the leg rotation action, or may be performed after the mobile robot performs the leg rotation action. In a case in which the method in FIG. 7 is after the leg rotation action is performed (that is, a case in which the mobile robot performs a folding operation on a torso structure is after a folding operation is performed on a leg), before the folding operation on the leg is performed, the method further includes at least one of the following three operations.

**S1:** Control the torso structure to be in a sideway swinging state, the sideway swinging state meaning that a first included angle exists between an orientation of a front side of the torso structure and an extending direction of the first swinging leg set, and/or the sideway swinging state meaning that a second included angle exists between the orientation of the front side of the torso structure and an extending direction of the second swinging leg set.

In an embodiment, the first swinging leg set is an outer swinging leg set, and the second swinging leg set is an inner swinging leg set. A distance between any swinging leg in the outer swinging leg set and a central axis of the mobile robot is greater than a distance between any swinging leg in the inner swinging leg set and the central axis of the mobile robot.

When the outer swinging leg set is to be rotated about a hip rotation axis by using the inner swinging leg set as support legs, before the leg rotation operation is performed, the torso structure is controlled to be in the sideway swinging state. A sideway swinging angle of the sideway swinging state is associated with a structure of the mobile robot. In some embodiments, the sideway swinging angle is a second included angle between an orientation of the front side of the torso structure and an extending direction of the inner swinging leg set in a horizontally split state. In some embodiments, the sideway swinging angle is a first included angle between the orientation of the front side of the torso structure and an extending direction of the outer swinging leg set. With reference to FIG. 9, FIG. 9 shows a first included angle θ₁ between an orientation of a front side of a torso structure 40 and an extending direction of a first swinging leg set 10 in a sideway swinging state. FIG. 9 further shows a second included angle θ₂ between an orientation of a front side of a torso structure 40 and an extending direction of a second swinging leg set 20 in a sideway swinging state.

In some embodiments, the sideway swinging angle is 30 degrees. When the sideway swinging angle is 30 degrees, interference does not occur between mechanical structures during the rotation of the outer swinging leg set. Therefore, the outer swinging leg set can smoothly rotate about the hip rotation axis to a state in which the outer swinging leg set and the inner swinging leg set are horizontally closed together. In some embodiments, the sideway swinging angle is 90 degrees, which is a preset maximum avoidance angle, to ensure, to the greatest extent, that the outer swinging leg set does not interfere with the torso structure during the rotation.

**S2:** Control the torso structure to be in a bent state, the bent state meaning that a third included angle exists between a central axis of the torso structure and a gravity direction.

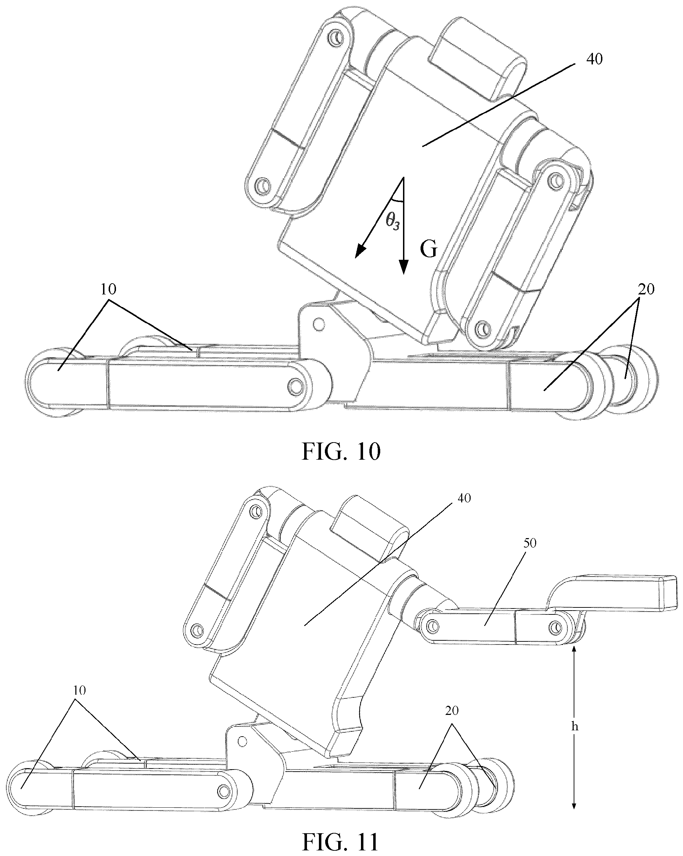

In an embodiment, before the leg rotation operation is performed, the torso structure is controlled to be in the bent state. A bending angle of the bent state is associated with a position of a center of gravity of the mobile robot. During execution of the leg rotation operation, a swinging leg set will be lifted. Therefore, the torso structure is controlled to be in the bent state, so that the center of gravity of the robot always falls within a contact plane between the support leg set and a reference plane during the execution of the leg rotation operation. With reference to FIG. 10, FIG. 10 shows a mobile robot in both a sideway swinging state and a bent state. FIG. 10 shows a third included angle θ₃ between a central axis of a torso structure 40 and a gravity direction G in a bent state.

**S3:** Control a motion arm to be in a first extended state, the first extended state being a state in which the motion arm extends in a direction of a support leg set, the support leg set including a swinging leg set that comes into contact with a reference plane when a leg rotation action is performed.

In an embodiment, the mobile robot further has a torso structure and a motion arm located on a peripheral side of the torso structure. Before the leg rotation operation is performed, the motion arm is controlled to be in the extended state in which the motion arm extends in the direction of the support leg set. A lifting height of the motion arm in the extended state is associated with the position of the center of gravity of the mobile robot. During the execution of the leg rotation operation, a swinging leg set will be lifted. Therefore, the motion arm is controlled to stretch in the direction of the support leg set, so that the center of gravity of the robot always falls within the contact plane between the support leg set and the reference plane during the execution of the leg rotation operation.

With reference to FIG. 11, FIG. 11 is a schematic diagram of a torso structure in a sideway swinging state and a bent state, with a motion arm being in a first extended state. FIG. 11 further shows a lifting height h of a motion arm 50. In this case, a support leg set is a second swinging leg set 20, and the motion arm 50 extends along a direction of the second swinging leg set 20.

Operation S1, operation S2, and operation S3 above may be freely combined to a plurality of cases. In a case, before a leg rotation action is performed, only the torso structure is simultaneously controlled to be in the sideway swinging state and the bent state. In another case, before the leg rotation action is performed, only the torso structure is simultaneously controlled to be in the sideway swinging state and the motion arm is controlled to be in the first extended state. Various cases that can be obtained by combination are not enumerated herein. Next, an embodiment in which operation S1, operation S2, and operation S3 are simultaneously performed is described.

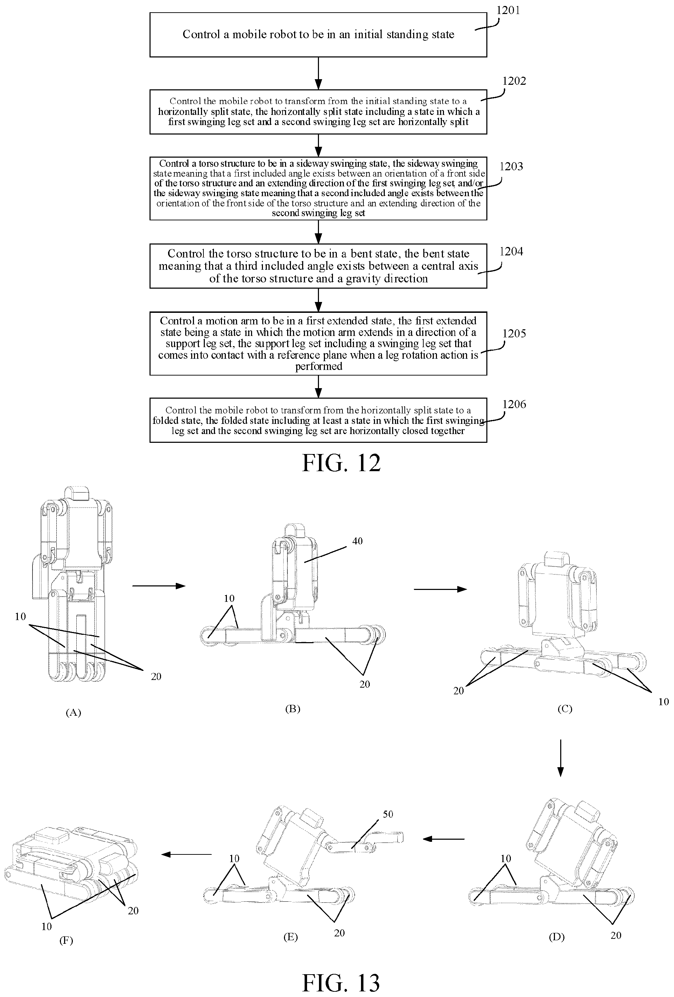

FIG. 12 is a flowchart of a method for controlling a mobile robot according to an exemplary embodiment of this application. Specifically, the control method shown in FIG. 12 is performed by a controller of the mobile robot. The controller of the mobile robot may be located in a body of the robot or outside the robot. The method includes the following operations.

**Operation 1201:** Control the mobile robot to be in an initial standing state.

The initial standing state is an initial reference state in which the mobile robot executes a folding action method shown in FIG. 12. In other words, before performing a subsequent folding action, the mobile robot needs to be in the initial standing state.

With reference to FIG. 13, part (A) of FIG. 13 shows a schematic diagram in which an initial standing state is a state in which a first swinging leg set 10 and a second swinging leg set 20 of a mobile robot are closed together and jointly stand for support.

**Operation 1202:** Control the mobile robot to transform from the initial standing state to a horizontally split state, the horizontally split state including a state in which the first swinging leg set and the second swinging leg set are horizontally split.

The horizontally split state is a state in which an extending direction of the first swinging leg set is opposite to an extending direction of the second swinging leg set. Specifically, in the horizontally split state, an included angle of 180 degrees exists between a direction from a leg root to a leg end of the first swinging leg set and a direction from the leg root to a leg end of the second swinging leg set. With reference to FIG. 13, part (B) of FIG. 13 shows that the first swinging leg set 10 and the second swinging leg set 20 are in a horizontally split state.

**Operation 1203:** Control a torso structure to be in a sideway swinging state, the sideway swinging state meaning that a first included angle exists between an orientation of a front side of the torso structure and an extending direction of the first swinging leg set, and/or the sideway swinging state meaning that a second included angle exists between the orientation of the front side of the torso structure and an extending direction of the second swinging leg set.

In an embodiment, the first swinging leg set is an outer swinging leg set, and the second swinging leg set is an inner swinging leg set. A distance between any swinging leg in the outer swinging leg set and a central axis of the mobile robot is greater than a distance between any swinging leg in the inner swinging leg set and the central axis of the mobile robot.

When the outer swinging leg set is to be rotated about a hip rotation axis by using the inner swinging leg set as support legs, before the leg rotation operation is performed, the torso structure is controlled to be in the sideway swinging state. A sideway swinging angle of the sideway swinging state is associated with a structure of the mobile robot. In some embodiments, the sideway swinging angle is a second included angle between an orientation of the front side of the torso structure and an extending direction of the inner swinging leg set in a horizontally split state. In some embodiments, the sideway swinging angle is a first included angle between the orientation of the front side of the torso structure and an extending direction of the outer swinging leg set.

In some embodiments, the sideway swinging angle is 30 degrees. When the sideway swinging angle is 30 degrees, interference does not occur between mechanical structures during the rotation of the outer swinging leg set. Therefore, the outer swinging leg set can smoothly rotate about the hip rotation axis to a state in which the outer swinging leg set and the inner swinging leg set are horizontally closed together. In some embodiments, the sideway swinging angle is 90 degrees, which is a preset maximum avoidance angle, to ensure, to the greatest extent, that the outer swinging leg set does not interfere with the torso structure during the rotation.

Referring to FIG. 13, part (C) of FIG. 13 shows that the torso structure 40 is in a sideway swinging state.

**Operation 1204:** Control the torso structure to be in a bent state, the bent state meaning that a third included angle exists between a central axis of the torso structure and a gravity direction.

In an embodiment, before the leg rotation operation is performed, the torso structure is controlled to be in the bent state. A bending angle of the bent state is associated with a position of a center of gravity of the mobile robot. During execution of the leg rotation operation, a swinging leg set will be lifted. Therefore, the torso structure is controlled to be in the bent state, so that the center of gravity of the robot always falls within a contact plane between the support leg and a reference plane during the execution of the leg rotation operation. With reference to FIG. 13, part (D) of FIG. 13 shows a mobile robot with a torso structure 40 being in a sideway swinging state and a bent state.

**Operation 1205:** Control a motion arm to be in a first extended state, the first extended state being a state in which the motion arm extends in a direction of a support leg, the support leg including a swinging leg set that comes into contact with a reference plane when a leg rotation action is performed.

In an embodiment, the mobile robot further has a motion arm located on a peripheral side of the torso structure. Before the leg rotation operation is performed, the motion arm is controlled to be in the extended state in which the motion arm extends in the direction of the support leg. A lifting height of the motion arm in the extended state is associated with the position of the center of gravity of the mobile robot. During the execution of the leg rotation operation, a swinging leg set will be lifted. Therefore, the motion arm is controlled to stretch in the direction of the support leg, so that the center of gravity of the robot always falls within the contact plane between the support leg and the reference plane during the execution of the leg rotation operation. With reference to FIG. 13, part (E) of FIG. 13 shows a mobile robot with a torso structure being in a sideway swinging state and a bent state and a motion arm being in a first extended state.

**Operation 1206:** Control the mobile robot to transform from the horizontally split state to a folded state, the folded state including at least a state in which the first swinging leg set and the second swinging leg set are horizontally closed together.

In an embodiment, the first swinging leg set or the second swinging leg set of the mobile robot is controlled to perform a leg rotation action about a hip rotation axis until the first swinging leg set and the second swinging leg set are horizontally closed together. Specifically, the first swinging leg set is controlled to perform the leg rotation action about the hip rotation axis by using the second swinging leg set as support legs in the horizontally split state, until the first swinging leg set and the second swinging leg set are horizontally closed together. Alternatively, the second swinging leg set is controlled to perform the leg rotation action about the hip rotation axis by using the first swinging leg set as support legs in the horizontally split state, until the first swinging leg set and the second swinging leg set are horizontally closed together. With reference to FIG. 13, part (F) of FIG. 13 shows a mobile robot in a folded state.

Based on the above, before the leg rotation operation is performed, the mobile robot is controlled to be in the sideway swinging state, to avoid structural interference of the robot during the leg rotation. Before the leg rotation operation is performed, the mobile robot is controlled to be in the bent state and the motion arm is controlled to be in the first extended state, to resolve a problem that the robot is unstable as a result of an offset of the center of gravity during the leg rotation.

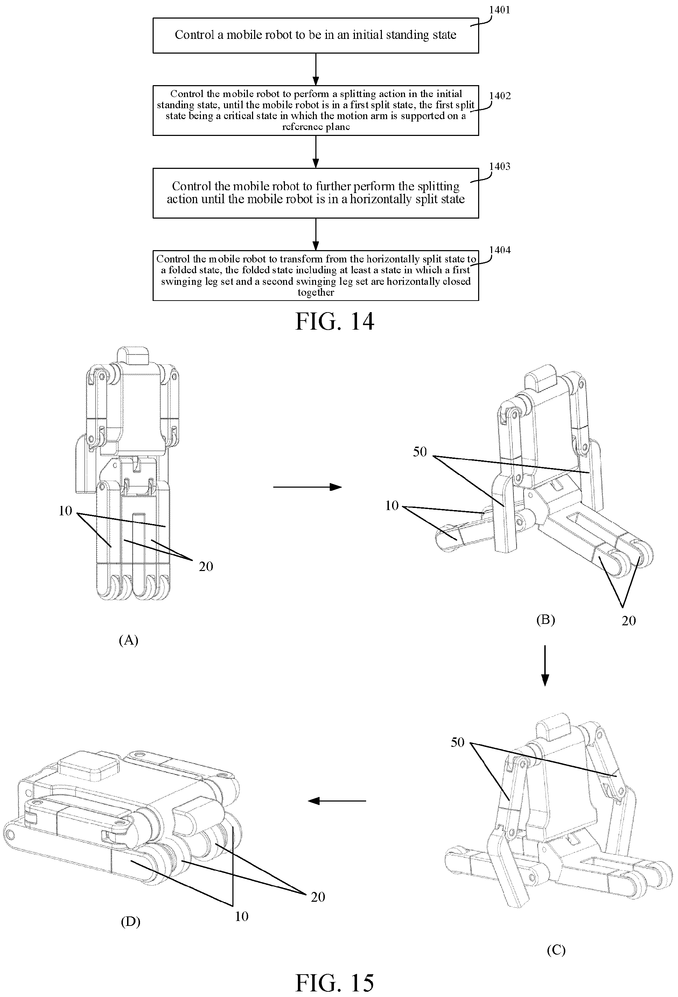

FIG. 14 is a flowchart of a method for controlling a mobile robot according to an exemplary embodiment of this application. Specifically, the control method shown in FIG. 14 is performed by a controller of the mobile robot. The controller of the mobile robot may be located in a body of the robot or outside the robot. The method includes the following operations.

**Operation 1401:** Control the mobile robot to be in an initial standing state.

With reference to FIG. 15, part (A) of FIG. 15 shows a schematic diagram in which an initial standing state is a state in which a first swinging leg set 10 and a second swinging leg set 20 of a mobile robot are closed together and jointly stand for support.

**Operation 1402:** Control the mobile robot to perform the splitting action in the initial standing state, until the mobile robot is in a first split state, the first split state being a critical state in which the motion arm is supported on a reference plane.

During splitting, the mobile robot extends out of the motion arm in a gravity direction. The first split state is a critical state in which the motion arm is supported on the reference plane. Before the critical state, the motion arm does not come into contact with the reference plane.

With reference to FIG. 15, part (B) of FIG. 15 shows a critical state in which the motion arm 50 is supported on a reference plane.

**Operation 1403:** Control the mobile robot to further perform the splitting action until the mobile robot is in the horizontally split state.

In an embodiment, the mobile robot is controlled to further perform the splitting action, and control the motion arm of the mobile robot to continuously contract until the mobile robot is in the horizontally split state.

In some embodiments, in a process in which the mobile robot further performs the splitting action, the straight-strip-shaped motion arm is bent to a curved motion arm, to continuously contract the motion arm. Specifically, by bending an elbow joint of the motion arm, the motion arm continuously contracts. Exemplarily, part (C) of FIG. 15 is a schematic diagram showing that an elbow joint of a motion arm 50 is in a bent state. Part (C) of FIG. 15 shows that the mobile robot is in a horizontally split state.

In some embodiments, in a process in which the mobile robot further performs the splitting action, the motion arm contracts the robotic upper arm and/or the robotic forearm, to continuously contract the motion arm. Specifically, the motion arm includes a robotic upper arm and a robotic forearm. The robotic upper arm and the robotic forearm are connected through sleeving, and the robotic upper arm and/or the robotic forearm are controlled to contract in a sleeving direction, thereby continuously contracting the motion arm.

**Operation 1404:** Control the mobile robot to transform from the horizontally split state to a folded state, the folded state including at least a state in which the first swinging leg set and the second swinging leg set are horizontally closed together.

With reference to FIG. 15, part (D) of FIG. 15 shows a mobile robot in a folded state. In this case, the first swinging leg set 10 and the second swinging leg set 20 are in a horizontally closed state.

Based on the above, the mobile robot supports the reference plane through the motion arm during splitting. It can be avoided that the mobile robot is controlled to perform splitting only through a hip joint, thereby reducing force bearing on the hip joint and improving stability of the robot.

A detailed process of transformation from the initial standing state to the folded state by the mobile robot has been described above. The initial standing state is a preset starting state in which the mobile robot performs a folding operation. Therefore, the mobile robot further needs to be controlled to transform from any standing state to the initial standing state.

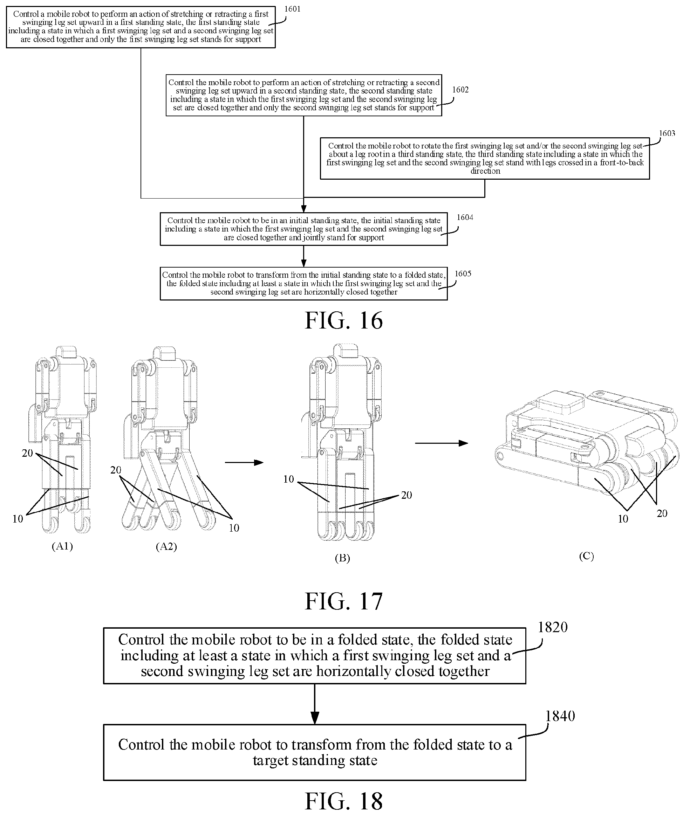

FIG. 16 is a flowchart of a method for controlling a mobile robot according to an exemplary embodiment of this application. Specifically, the control method shown in FIG. 16 is performed by a controller of the mobile robot. The controller of the mobile robot may be located in a body of the robot or outside the robot. The method includes the following operations.

**Operation 1601:** Control the mobile robot to perform an action of stretching or retracting a first swinging leg set upward in a first standing state, the first standing state including a state in which the first swinging leg set and a second swinging leg set are closed together and only the first swinging leg set stands for support.

The first standing state is any standing state of the first mobile robot. In the first standing state, only the first swinging leg set stands for support. The first swinging leg set is an outer swinging leg set. With reference to FIG. 17, part (A1) of FIG. 17 shows a state in which a first swinging leg set 10 and a second swinging leg set 20 are closed together and only the first swinging leg set 10 stands for support.

By stretching or retracting the first swinging leg set upward, the state in which the first swinging leg set and the second swinging leg set jointly support for support may be achieved. The first swinging leg set includes a first robotic thigh and a first robotic calf. The first robotic thigh and the first robotic calf are connected through sleeving. The mobile robot is controlled to contract the first robotic thigh and/or the first robotic calf in a sleeving direction, so that the first swinging leg set can be contracted upward.

**Operation 1602:** Control the mobile robot to perform an action of stretching or retracting a second swinging leg set upward in a second standing state, the second standing state including a state in which the first swinging leg set and the second swinging leg set are closed together and only the second swinging leg set stands for support.

The second standing state is any standing state of the second mobile robot. In the second standing state, only the second swinging leg set stands for support. The second swinging leg set is an inner swinging leg set.

By stretching or retracting the second swinging leg set upward, the state in which the first swinging leg set and the second swinging leg set jointly support for support may be achieved. The second swinging leg set includes a second robotic thigh and a second robotic calf. The second robotic thigh and the second robotic calf are connected through sleeving. The mobile robot is controlled to contract the second robotic thigh and/or the second robotic calf in a sleeving direction, so that the second swinging leg set can be stretched or retracted upward.

**Operation 1603:** Control the mobile robot to rotate the first swinging leg set and/or the second swinging leg set about the hip rotation axis in a third standing state, the third standing state including a state in which the first swinging leg set and the second swinging leg set stand with legs crossed in a front-to-back direction.

The third standing state is any standing state of the third mobile robot. In the third standing state, the first swinging leg set and the second swinging leg set stand with legs crossed in a front-to-back direction. Standing with legs crossed in a front-to-back direction means that a second included angle exists between an extending direction of the first swinging leg set and an extending direction of the second swinging leg set in a standing state (not in a parallel state). In some embodiments, with the robot standing with legs crossed in a front-to-back direction, the first swinging leg set is located before the second swinging leg set, or the first swinging leg set is located behind the second swinging leg set. Specifically, with the robot standing with legs crossed in a front-to-back direction, stop points of the first swinging leg set are located before stop points of the second swinging leg set, or the stop points of the first swinging leg set are located behind the stop points of the second swinging leg set.

With reference to FIG. 17, part (A2) of FIG. 17 shows that the first swinging leg set 10 and the second swinging leg set 20 are in a state of standing with legs crossed in a front-to-back direction. In this case, the first swinging leg set 10 is located before the second swinging leg set 20, the first swinging leg set is an outer swinging leg set, and the second swinging leg set is an inner swinging leg set.

By rotating the first swinging leg set and/or the second swinging leg set about the hip rotation axis, the state in which the first swinging leg set and the second swinging leg set jointly support for support may be achieved.

**Operation 1604:** Control the mobile robot to be in an initial standing state, the initial standing state including a state in which the first swinging leg set and the second swinging leg set are closed together and jointly stand for support.

The initial standing state is an initial reference state in which the mobile robot executes a folding action method shown in FIG. 16. In other words, before performing a subsequent folding action, the mobile robot needs to be in the initial standing state.

With reference to FIG. 17, part (B) of FIG. 17 shows a mobile robot in an initial standing state. In this case, the first swinging leg set 10 and the second swinging leg set 20 are closed together and jointly stand for support.

**Operation 1605:** Control the mobile robot to transform from the initial standing state to a folded state, the folded state including at least a state in which the first swinging leg set and the second swinging leg set are horizontally closed together.

With reference to FIG. 17, part (C) of FIG. 17 shows a mobile robot in a folded state. In this case, the first swinging leg set 10 and the second swinging leg set 20 are horizontally closed together.

Based on the above, a method for transforming from a plurality of standing states to the initial standing state is provided, thereby providing a complete process of folding the mobile robot.

**Related content of completing the folding operation performed by the robot is described above, and related content of performing the unfolding operation by the robot is described below.**

FIG. 18 is a flowchart of a method for controlling a mobile robot according to an exemplary embodiment of this application. Specifically, the control method shown in FIG. 18 is performed by a controller of the mobile robot. The controller of the mobile robot may be located in a body of the robot or outside the robot. The method includes the following operations.

**Operation 1820:** Control the mobile robot to be in a folded state characterized by the first swinging leg set and the second swinging leg set being positioned together horizontally. In embodiments of the present application, operation 1820 may include following steps: controlling the mobile robot to be in a folded state, the folded state including at least a state in which the first swinging leg set and the second swinging leg set are horizontally closed together.

In this embodiment, the mobile robot includes a first swinging leg set and a second swinging leg set. The first swinging leg set includes a plurality of first swinging legs and/or the second swinging leg set includes a plurality of second swinging legs. The first swinging leg set and the second swinging leg set are arranged side by side, and a rotation axis of the first swinging leg set and a rotation axis of the second swinging leg set are located on the same vertical plane. At least one of the first swinging leg set and the second swinging leg set includes a plurality of swinging legs. In some embodiments, the first swinging leg set includes a plurality of first swinging legs, and the second swinging leg set includes one second swinging leg. In some embodiments, the first swinging leg set includes one first swinging leg, and the second swinging leg set includes the plurality of second swinging legs. In some embodiments, the first swinging leg set includes the plurality of first swinging legs, and the second swinging leg set includes the plurality of second swinging legs. In some embodiments, the plurality of first swinging legs and the plurality of second swinging legs are alternately distributed one by one. In some embodiments, the plurality of first swinging legs are distributed on two sides of the plurality of second swinging legs.

The folded state refers to a state in which the mobile robot is in a non-operating mode. A space volume occupied by the robot in the non-operating mode is smaller than a space volume occupied by the robot in an operating mode. The folded state is a state obtained by the robot by performing a folding action in the target standing state.

The folded state including at least a state in which the first swinging leg set and the second swinging leg set are horizontally closed together. Horizontally closed together means that extending directions of the first swinging leg set and the second swinging leg set are parallel to a horizontal reference plane and the sides of the first swinging leg set is attached to (or face) the sides of the second swinging leg set. Alternatively, horizontally closed together means that extending directions of the first swinging leg set and the second swinging leg set are parallel to the horizontal reference plane, and an included angle does not exist between a horizontal axis of the first swinging leg set and a horizontal axis of the second swinging leg set.

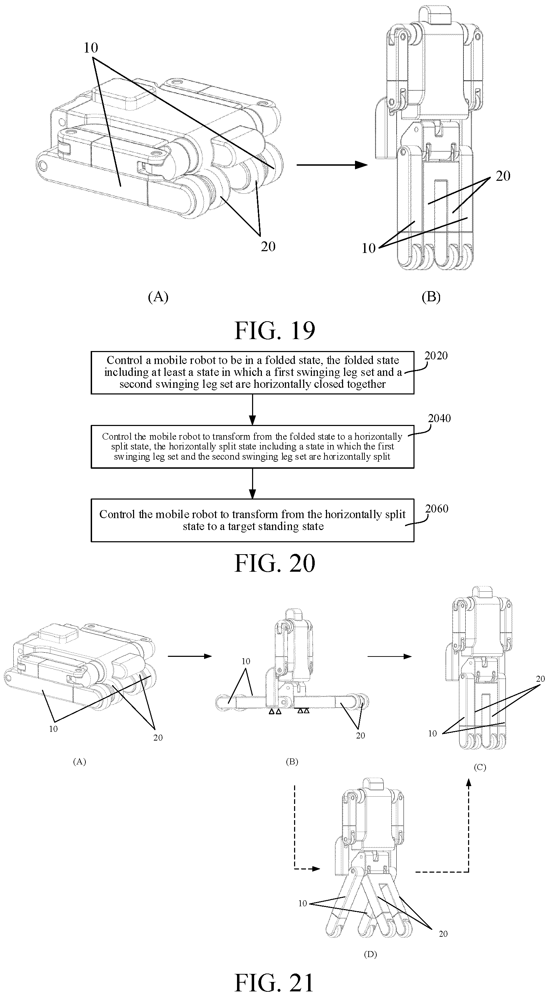

In some embodiments, the mobile robot further includes the torso structure. The folded state further includes a state in which a front side or a back side of the torso structure is attached to the first swinging leg set and/or the second swinging leg set after being folded. In this case, the front side or the back side of the torso structure is oriented perpendicular to an extending direction of the first swinging leg set and/or the second swinging leg set. With reference to FIG. 19, part (A) of FIG. 19 shows a mobile robot in a folded state. In this case, the first swinging leg set 10 and the second swinging leg set 20 are horizontally closed together.

**Operation 1840:** Control the mobile robot to transform from the folded state to the target standing state.

The target standing state is a reference unfolded state in which the mobile robot performs the unfolding method shown in FIG. 18. In other words, the mobile robot needs to experience the target standing state to execute an unfolding action sequence.

In an embodiment, the target standing state includes a state in which the first swinging leg set and the second swinging leg set of the mobile robot are closed together and jointly stand for support. Specifically, closed together in the target standing state means that sides of the first swinging leg set are attached to (or face) sides of the second swinging leg set in the standing state, or closed together in the target standing state means that an included angle does not exist between a vertical axis of the first swinging leg set and a vertical axis of the second swinging leg set in the standing state.

In an embodiment, the target standing state includes a state in which a first swinging leg set and a second swinging leg set of the mobile robot are closed together and only one swinging leg set stands for support. In some embodiments, the leg set supporting for support is the first swinging leg set or the second swinging leg set. Specifically, closed together in the target standing state means that sides of the first swinging leg set are attached to (or face) sides of the second swinging leg set in the standing state, or closed together in the target standing state means that an included angle does not exist between a vertical axis of the first swinging leg set and a vertical axis of the second swinging leg set in the standing state.

In an embodiment, the target standing state includes a state in which the first swinging leg set and the second swinging leg set of the mobile robot stand with legs crossed. In some embodiments, in the state of standing with legs crossed, the first swinging leg set is located before or behind the second swinging leg set.

With reference to FIG. 19, part (B) of FIG. 19 is a schematic diagram in which a target standing state is a state in which a first swinging leg set 10 and a second swinging leg set 20 of a mobile robot are closed together and jointly stand for support.

Based on the above, in the operating state, the first swinging leg set and the second swinging leg set of the mobile robot are arranged side by side. In a non-operating state, the first swinging leg set and the second swinging leg set of the mobile robot are horizontally closed together, so that a volume of the mobile robot in the non-operating state can be reduced.

FIG. 20 is a flowchart of a method for controlling a mobile robot according to an exemplary embodiment of this application. Specifically, the control method shown in FIG. 20 is performed by a controller of the mobile robot. The controller of the mobile robot may be located in a body of the robot or outside the robot. The method includes the following operations.

**Operation 2020:** Control the mobile robot to be in a folded state, the folded state including at least a state in which a first swinging leg set and a second swinging leg set are horizontally closed together.

In some embodiments, the mobile robot further includes the torso structure. The folded state further includes a state in which a front side or a back side of the torso structure is attached to the first swinging leg set and/or the second swinging leg set after being folded. In this case, the front side or the back side of the torso structure is oriented perpendicular to an extending direction of the first swinging leg set and/or the second swinging leg set. With reference to FIG. 21, part (A) of FIG. 21 shows a mobile robot in a folded state. In this case, the first swinging leg set 10 and the second swinging leg set 20 are horizontally closed together.

**Operation 2040:** Control the mobile robot to transform from the folded state to a horizontally split state, the horizontally split state including a state in which the first swinging leg set and the second swinging leg set are horizontally split.

The horizontally split state is a state in which an extending direction of the first swinging leg set is opposite to an extending direction of the second swinging leg set. Specifically, in the horizontally split state, an included angle of 180 degrees exists between a direction from a leg root to a leg end of the first swinging leg set and a direction from the leg root to a leg end of the second swinging leg set.

With reference to FIG. 21, part (B) of FIG. 21 shows a mobile robot in a horizontally split state. In this case, a first swinging leg set 10 and a second swinging leg set 20 are horizontally split.

In an embodiment, the first swinging leg set or the second swinging leg set of the mobile robot is controlled to perform a leg rotation action about a hip rotation axis until the first swinging leg set and the second swinging leg set are horizontally split. Specifically, the first swinging leg set is controlled to perform the leg rotation action about the hip rotation axis by using the second swinging leg set as support legs in the horizontally closed state, until the first swinging leg set and the second swinging leg set are horizontally split. When the leg rotation action is performed about the hip rotation axis, the first swinging leg set transforms in height.

Alternatively, the second swinging leg set is controlled to perform the leg rotation action about the hip rotation axis by using the first swinging leg set as support legs in the horizontally closed state, until the first swinging leg set and the second swinging leg set are horizontally split. When the leg rotation action is performed about the hip rotation axis, the second swinging leg set transforms in height.

In an embodiment, a first swinging leg includes a first leg and a first wheel located on an end of the first leg, and a second swinging leg includes a second leg and a second wheel located on an end of the second leg. A first protrusion is arranged at a root of the first leg, and a second protrusion is arranged at a root of the second leg.

After operation 2040, the method further includes: determining a plurality of first wheels and a plurality of first protrusions respectively corresponding to the plurality of first swinging legs and a plurality of second wheels and a plurality of second protrusions respectively corresponding to the plurality of second swinging legs as a support portion of the mobile robot in the horizontally split state; and controlling the mobile robot to be in the horizontally split state. A position of the protrusion is represented by using a "triangle" in part (B) of FIG. 21.

**Operation 2060:** Control the mobile robot to transform from the horizontally split state to a target standing state.

The target standing state is a reference unfolded state in which the mobile robot performs the unfolding method shown in FIG. 20. In other words, the mobile robot needs to experience the target standing state to execute an unfolding action sequence.

With reference to FIG. 21, part (C) of FIG. 21 is a schematic diagram in which a target standing state is a state in which a first swinging leg set 10 and a second swinging leg set 20 of a mobile robot are closed together and jointly stand for support.

In an embodiment, the mobile robot is controlled to perform a stand-up action in the horizontally split state, until the mobile robot is in the target standing state. The stand-up action is an action of gradually decreasing an included angle between the first swinging leg set and the second swinging leg set.

In an embodiment, the stand-up action is an action of simultaneously controlling the first swinging leg set and the second swinging leg set to rotate in opposite directions. In some embodiments, the first swinging leg set is controlled to rotate clockwise along the hip rotation axis, and the second swinging leg set is controlled to rotate counterclockwise along the hip rotation axis. In some embodiments, the first swinging leg set is controlled to rotate counterclockwise along the hip rotation axis, and the second swinging leg set is controlled to rotate clockwise along the hip rotation axis.

In an embodiment, the stand-up action is an action of controlling rotation of only one swinging leg set. In some embodiments, the first swinging leg set or the second swinging leg set is controlled to rotate clockwise along the hip rotation axis. In some embodiments, the first swinging leg set or the second swinging leg set is controlled to rotate counterclockwise along the hip rotation axis.

Part (D) of FIG. 21 shows an intermediate state when the mobile robot performs the stand-up action to reach the target standing state. In this case, an included angle exists between a first swinging leg set 10 and a second swinging leg set 20. A stand-up action corresponding to part (D) of FIG. 21 is an action of simultaneously controlling the first swinging leg set 10 and the second swinging leg set 20 to rotate in opposite directions.

Based on the above, a folding method is further provided by controlling the mobile robot to transform from the horizontally closed state to the horizontally split state, and then controlling the mobile robot to transform from the horizontally split state to the target standing state. In addition, the robot is transformed from the horizontally split state to the target standing state through the stand-up action, which provides a self-unfolding method of the robot. In a process of implementing a complete unfolding operation, the robot does not need to be assisted by an external force, such as manpower, and the robot is always in a stable state in an unfolding process.

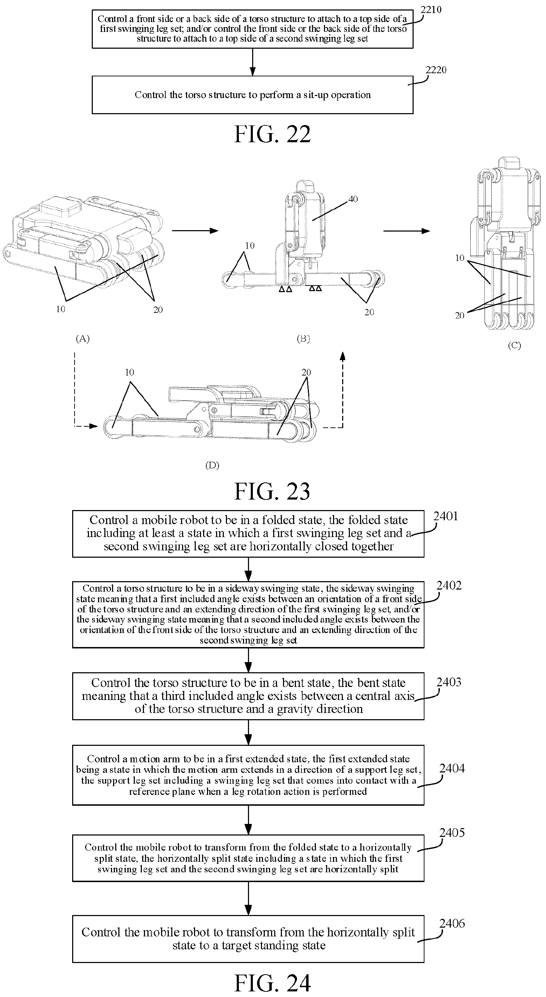

Based on the exemplary embodiment shown in FIG. 20, if the mobile robot further includes the torso structure, the mobile robot further needs to perform an action of unfolding the torso structure. Operation 2060 further includes operations shown in FIG. 22 in addition to "controlling the first swinging leg set or the second swinging leg set of the mobile robot to perform a leg rotation action about the hip rotation axis until the first swinging leg set and the second swinging leg set are horizontally closed together". Operations in FIG. 22 may be performed before the robot performs the leg rotation action, or may be performed after the robot performs the leg rotation action. The method shown in FIG. 22 includes the following operations.

**Operation 2210:** Control the front side or the back side of the torso structure to attach to a top side of the first swinging leg set; and/or control the front side or the back side of the torso structure to attach to a top side of the second swinging leg set.

With reference to FIG. 23, FIG. 23 shows a case in which a leg rotation action of a mobile robot is first performed, and then an unfolding operation of a torso structure is performed. Part (A) of FIG. 23, part (B) of FIG. 23, and part (C) of FIG. 23 respectively correspond to part (A) of FIG. 21, part (B) of FIG. 21, and part (C) of FIG. 21 that are introduced in FIG. 21. Details are not described herein again. Part (D) of FIG. 23 is a schematic diagram showing that a torso structure maintains being folded. In this case, a front side of the torso structure 40 is attached to the top side of the second swinging leg set 20.

Operation 2220: Control the torso structure to perform a sit-up operation.

The torso structure is controlled to perform the sit-up operation through the pitch rotation axis.

In an embodiment, the sit-up operation is performed until the torso structure is in a target upright state. The target upright state is a reference upright state of the torso structure, and after the unfolding operation is performed on the torso structure, the torso structure needs to be restored to the reference upright state. In some embodiments, in the target upright state, an orientation of a front side of the torso structure is parallel to an extending direction of the first swinging leg set in the horizontally split state, and/or an orientation of a front side of the torso structure is parallel to an extending direction of the second swinging leg set in the horizontally split state. Alternatively, in the initial upright state, a central axis of the torso structure is parallel to a gravity direction.

In an embodiment, the sit-up operation is performed without controlling the torso structure to reach the preset upright state. Exemplarily, the sit-up operation is performed, so that the central axis of the torso structure of the mobile robot reaches any included angle with the gravity direction.

Based on the exemplary embodiment shown in FIG. 22, the unfolding method in FIG. 22 may be performed after the mobile robot performs the leg rotation action, or may be performed before the mobile robot performs the leg rotation action. In a case in which the method in FIG. 22 is before the leg rotation action is performed (that is, a case in which the mobile robot performs an unfolding operation on the torso structure is before the folding operation is performed on a leg), after the unfolding operation on the torso structure is performed and before the leg unfolding operation is performed, the method further includes at least one of the following three operations.

**S4:** Control the torso structure to be in a sideway swinging state, the sideway swinging state meaning that a first included angle exists between an orientation of a front side of the torso structure and an extending direction of the first swinging leg set, and/or the sideway swinging state meaning that a second included angle exists between the orientation of the front side of the torso structure and an extending direction of the second swinging leg set.

In an embodiment, the first swinging leg set is an outer swinging leg set, and the second swinging leg set is an inner swinging leg set. A distance between any swinging leg in the outer swinging leg set and a central axis of the mobile robot is greater than a distance between any swinging leg in the inner swinging leg set and the central axis of the mobile robot.

When the outer swinging leg set is to be rotated about a hip rotation axis by using the inner swinging leg set as support legs, before the leg rotation operation is performed, the torso structure is controlled to be in the sideway swinging state. A sideway swinging angle of the sideway swinging state is associated with a structure of the mobile robot. In some embodiments, the sideway swinging angle is a second included angle between an orientation of the front side of the torso structure and an extending direction of the inner swinging leg set in a horizontally split state. In some embodiments, the sideway swinging angle is a first included angle between the orientation of the front side of the torso structure and an extending direction of the outer swinging leg set. With reference to FIG. 9, FIG. 9 shows a first included angle θ₁ and a second included angle θ₂ in a sideway swinging state.

In some embodiments, the sideway swinging angle is 30 degrees. When the sideway swinging angle is 30 degrees, interference does not occur between mechanical structures during the rotation of the outer swinging leg set. Therefore, the outer swinging leg set can smoothly rotate about the hip rotation axis to a state in which the outer swinging leg set and the inner swinging leg set are horizontally closed together. In some embodiments, the sideway swinging angle is 90 degrees, which is a preset maximum avoidance angle, to ensure, to the greatest extent, that the outer swinging leg set does not interfere with the torso structure during the rotation.

**S5:** Control the torso structure to be in a bent state, the bent state meaning that a third included angle exists between a central axis of the torso structure and a gravity direction.

In an embodiment, before the leg rotation operation is performed, the torso structure is controlled to be in the bent state. A bending angle of the bent state is associated with a position of a center of gravity of the mobile robot. During execution of the leg rotation operation, a swinging leg set will be put down. The torso structure is controlled to be in the bent state, so that the center of gravity of the robot always falls within a contact plane between the support leg set and a reference plane during the execution of the leg rotation operation.

With reference to FIG. 10, FIG. 10 shows a mobile robot in both a sideway swinging state and a bent state. FIG. 10 shows a third included angle θ₃ between a central axis of a torso structure in a bent state and a gravity direction.

**S6:** Control a motion arm to be in a first extended state, the first extended state being a state in which the motion arm extends in a direction of a support leg, the support leg including a swinging leg set that comes into contact with a reference plane when a leg rotation action is performed.

In an embodiment, the mobile robot further has a torso structure and a motion arm located on a peripheral side of the torso structure. Before the leg rotation operation is performed, the motion arm is controlled to be in the extended state in which the motion arm extends in the direction of the support leg. A lifting height of the motion arm in the extended state is associated with the position of the center of gravity of the mobile robot. During the execution of the leg rotation operation, a swinging leg set will be put down. Therefore, the motion arm is controlled to stretch in the direction of the support leg, so that the center of gravity of the robot always falls within the contact plane between the support leg and the reference plane during the execution of the leg rotation operation.

With reference to FIG. 11, FIG. 11 is a schematic diagram of a torso structure in a sideway swinging state and a bent state, with a motion arm being in a first extended state. FIG. 11 further shows a lifting height h of the motion arm.

Operation S4, operation S5, and operation S6 above may be freely combined to a plurality of cases. In a case, before a leg rotation action is performed, only the torso structure is simultaneously controlled to be in the sideway swinging state and the bent state. In another case, before the leg rotation action is performed, only the torso structure is simultaneously controlled to be in the sideway swinging state and the motion arm is controlled to be in the first extended state. Various cases that can be obtained by combination are not enumerated herein. Next, an embodiment in which operation S4, operation S5, and operation S6 are simultaneously performed is described.

FIG. 24 is a flowchart of a method for controlling a mobile robot according to an exemplary embodiment of this application. Specifically, the control method shown in FIG. 24 is performed by a controller of the mobile robot. The controller of the mobile robot may be located in a body of the robot or outside the robot. The method includes the following operations.

**Operation 2401:** Control the mobile robot to be in a folded state, the folded state including at least a state in which a first swinging leg set and a second swinging leg set are horizontally closed together.

**Operation 2402:** Control a torso structure to be in a sideway swinging state, the sideway swinging state meaning that a first included angle exists between an orientation of a front side of the torso structure and an extending direction of the first swinging leg set, and/or the sideway swinging state meaning that a second included angle exists between the orientation of the front side of the torso structure and an extending direction of the second swinging leg set.

In an embodiment, the first swinging leg set is an outer swinging leg set, and the second swinging leg set is an inner swinging leg set. A distance between any swinging leg in the outer swinging leg set and a central axis of the mobile robot is greater than a distance between any swinging leg in the inner swinging leg set and the central axis of the mobile robot.

When the outer swinging leg set is to be rotated about a hip rotation axis by using the inner swinging leg set as support legs, before the leg rotation operation is performed, the torso structure is controlled to be in the sideway swinging state. A sideway swinging angle of the sideway swinging state is associated with a structure of the mobile robot. In some embodiments, the sideway swinging angle is a second included angle between an orientation of the front side of the torso structure and an extending direction of the inner swinging leg set in a horizontally split state. In some embodiments, the sideway swinging angle is a first included angle between the orientation of the front side of the torso structure and an extending direction of the outer swinging leg set.

In some embodiments, the sideway swinging angle is 30 degrees. When the sideway swinging angle is 30 degrees, interference does not occur between mechanical structures during the rotation of the outer swinging leg set. Therefore, the outer swinging leg set can smoothly rotate about the hip rotation axis to a state in which the outer swinging leg set and the inner swinging leg set are horizontally closed together. In some embodiments, the sideway swinging angle is 90 degrees, which is a preset maximum avoidance angle, to ensure, to the greatest extent, that the outer swinging leg set does not interfere with the torso structure during the rotation.

**Operation 2403:** Control the torso structure to be in a bent state, the bent state meaning that a third included angle exists between a central axis of the torso structure and a gravity direction.

In an embodiment, before the leg rotation operation is performed, the torso structure is controlled to be in the bent state. A bending angle of the bent state is associated with a position of a center of gravity of the mobile robot. During execution of the leg rotation operation, a swinging leg set will be put down. Therefore, the torso structure is controlled to be in the bent state, so that the center of gravity of the robot always falls within a contact plane between the support leg set and a reference plane during the execution of the leg rotation operation.

**Operation 2404:** Control a motion arm to be in a first extended state, the first extended state being a state in which the motion arm extends in a direction of a support leg set, the support leg set including a swinging leg set that comes into contact with a reference plane when a leg rotation action is performed.

In an embodiment, the mobile robot further has a motion arm located on a peripheral side of the torso structure. Before the leg rotation operation is performed, the motion arm is controlled to be in the extended state in which the motion arm extends in the direction of the support leg set. A lifting height of the motion arm in the extended state is associated with the position of the center of gravity of the mobile robot. During the execution of the leg rotation operation, a swinging leg set will be put down. Therefore, the motion arm is controlled to stretch in the direction of the support leg set, so that the center of gravity of the robot always falls within the contact plane between the support leg set and the reference plane during the execution of the leg rotation operation.

**Operation 2405:** Control the mobile robot to transform from the folded state to a horizontally split state, the horizontally split state including a state in which the first swinging leg set and the second swinging leg set are horizontally split.

The horizontally split state is a state in which an extending direction of the first swinging leg set is opposite to an extending direction of the second swinging leg set. Specifically, in the horizontally split state, an included angle of 180 degrees exists between a direction from a leg root to a leg end of the first swinging leg set and a direction from the leg root to a leg end of the second swinging leg set.

The first swinging leg set or the second swinging leg set of the mobile robot is controlled to perform a leg rotation action about a hip rotation axis until the first swinging leg set and the second swinging leg set are horizontally split. Specifically, the first swinging leg set is controlled to perform the leg rotation action about the hip rotation axis by using the second swinging leg set as support legs in the folded state, until the first swinging leg set and the second swinging leg set are horizontally split. Alternatively, the second swinging leg set is controlled to perform the leg rotation action about the hip rotation axis by using the first swinging leg set as support legs in the horizontally closed state, until the first swinging leg set and the second swinging leg set are horizontally split.

**Operation 2406:** Control the mobile robot to transform from the horizontally split state to a target standing state.

The target standing state is a reference unfolded state in which the mobile robot performs the unfolding method shown in FIG. 24. In other words, the mobile robot needs to experience the target standing state to execute an unfolding action sequence.

Based on the above, before the leg rotation operation is performed, the mobile robot is controlled to be in the sideway swinging state, to avoid structural interference of the robot during the leg rotation. Before the leg rotation operation is performed, the mobile robot is controlled to be in the bent state and/or the motion arm is controlled to be in the first extended state, to resolve a problem that the robot is unstable as a result of an offset of the center of gravity during the leg rotation.

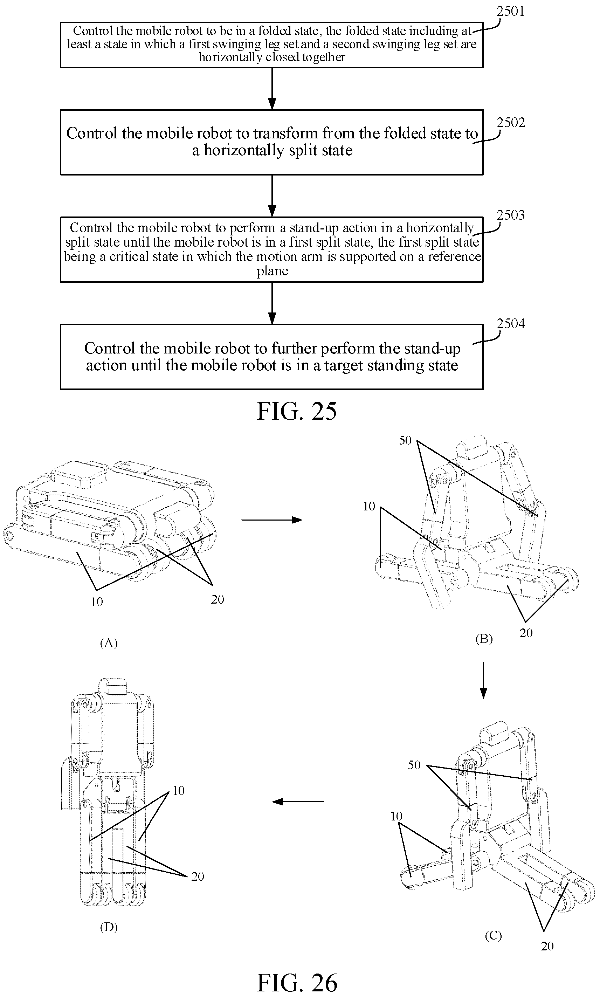

FIG. 25 is a flowchart of a method for controlling a mobile robot according to an exemplary embodiment of this application. Specifically, the control method shown in FIG. 25 is performed by a controller of the mobile robot. The controller of the mobile robot may be located in a body of the robot or outside the robot. The method includes the following operations.

**Operation 2501:** Control the mobile robot to be in a folded state, the folded state including at least a state in which a first swinging leg set and a second swinging leg set are horizontally closed together.

With reference to FIG. 26, part (A) of FIG. 26 shows a mobile robot in a folded state. In this case, the first swinging leg set 10 and the second swinging leg set 20 are horizontally closed together.

**Operation 2502:** Control the mobile robot to transform from the folded state to a horizontally split state, the horizontally split state including a state in which the first swinging leg set and the second swinging leg set are horizontally split.

The horizontally split state is a state in which an extending direction of the first swinging leg set is opposite to an extending direction of the second swinging leg set. Specifically, in the horizontally split state, an included angle of 180 degrees exists between a direction from a leg root to a leg end of the first swinging leg set and a direction from the leg root to a leg end of the second swinging leg set.

With reference to FIG. 26, part (B) of FIG. 26 shows a mobile robot in a horizontally split state. In this case, a first swinging leg set 10 and a second swinging leg set 20 are horizontally split.

**Operation 2503:** Control the mobile robot to perform the stand-up action in the horizontally split state until the mobile robot is in a first split state, the first split state being a critical state in which the motion arm is supported on the reference plane.

During standing up, the mobile robot extends out of the motion arm in a gravity direction. The first split state is a critical state in which the motion arm is supported on the reference plane. After the critical state, the motion arm does not come into contact with the reference plane.

In some embodiments, in a process in which the mobile robot performs the stand-up action, a curve-shaped motion arm is straightened to a straight-strip-shaped motion arm, so that the motion arm is continuously extended. Specifically, the motion arm is constantly extended by straightening an elbow joint of the motion arm. Exemplarily, part (B) of FIG. 26 is a schematic diagram showing that an elbow joint of a motion arm 50 is in a bent state. Part (B) of FIG. 26 shows that the mobile robot is in a horizontally split state.

In some embodiments, in a process in which the mobile robot performs the stand-up action, the motion arm stretches a robotic upper arm and/or a robotic forearm, to continuously stretch the motion arm. Specifically, the motion arm includes a robotic upper arm and a robotic forearm. The robotic upper arm and the robotic forearm are connected through sleeving, and the robotic upper arm and/or the robotic forearm are/is controlled to stretch in a sleeving direction, to continuously stretch the motion arm.

With reference to FIG. 26, part(C) of FIG. 26 shows a critical state in which the motion arm 50 is supported on a reference plane. Part (C) of FIG. 26 shows that the motion arm is in a straightened state.

**Operation 2504:** Control the mobile robot to further perform the stand-up action until the mobile robot is in the target standing state.

In an embodiment, the mobile robot is controlled to further perform the stand-up action, and control the motion arm of the mobile robot to continuously stretch until the mobile robot is in the target standing state.

The target standing state is a reference unfolded state in which the mobile robot performs the unfolding method shown in FIG. 25. In other words, the mobile robot needs to experience the target standing state to execute an unfolding action sequence.

With reference to FIG. 26, part (D) of FIG. 26 is a schematic diagram in which a target standing state is a state in which a first swinging leg set 10 and a second swinging leg set 20 of a mobile robot are closed together and jointly stand for support.

Based on the above, the mobile robot supports the reference plane through the motion arm during standing. It can be avoided that the mobile robot is controlled to perform standing only through a hip joint, thereby reducing force bearing on the hip joint and improving stability of the robot.

A detailed process in which the mobile robot transforms from the folded state to the target standing state has been described above. The target standing state is a preset end state in which the mobile robot performs an unfolding operation. Therefore, the mobile robot further needs to be controlled to transform from the target standing state to any standing state.

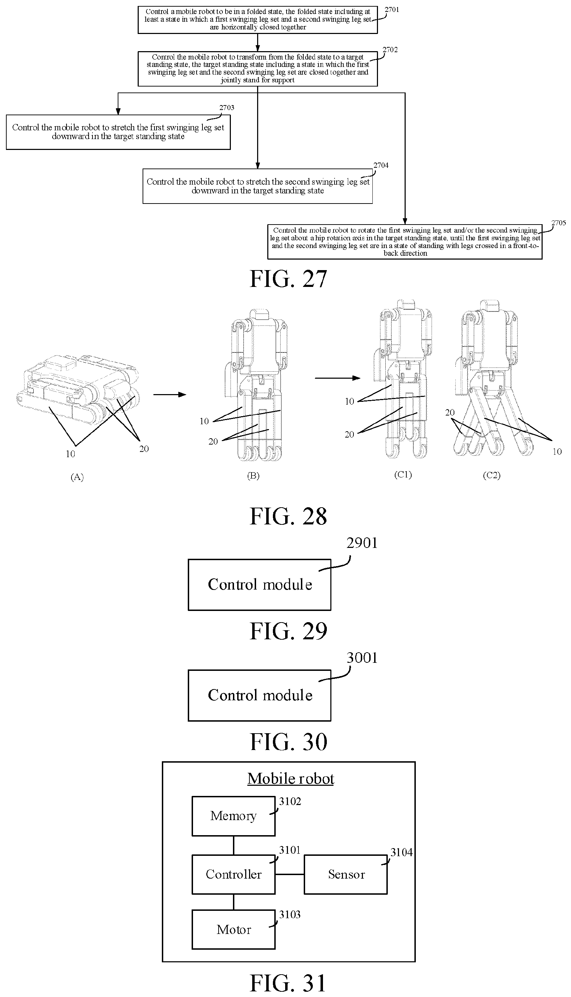

FIG. 27 is a flowchart of a method for controlling a mobile robot according to an exemplary embodiment of this application. Specifically, the control method shown in FIG. 27 is performed by a controller of the mobile robot. The controller of the mobile robot may be located in a body of the robot or outside the robot. The method includes the following operations.

**Operation 2701:** Control the mobile robot to be in a folded state, the folded state including at least a state in which a first swinging leg set and a second swinging leg set are horizontally closed together.

With reference to FIG. 28, part (A) of FIG. 28 shows a mobile robot in a folded state. In this case, the first swinging leg set 10 and the second swinging leg set 20 are horizontally closed together.

**Operation 2702:** Control the mobile robot to transform from the folded state to the target standing state, the target standing state including a state in which the first swinging leg set and the second swinging leg set are closed together and jointly stand for support.

The target standing state is a reference unfolded state in which the mobile robot performs the unfolding method shown in FIG. 27. In other words, the mobile robot needs to experience the target standing state to execute an unfolding action sequence.

With reference to FIG. 28, part (B) of FIG. 28 shows a mobile robot in a target standing state. In this case, the first swinging leg set 10 and the second swinging leg set 20 are in a state of closed together and jointly standing for support.

**Operation 2703:** Control the mobile robot to stretch the first swinging leg set downward in the target standing state

The first swinging leg set is an outer swinging leg set. With reference to FIG. 28, part (C1) of FIG. 28 shows a state in which a first swinging leg set 10 and a second swinging leg set 20 are closed together and only the first swinging leg set 10 stands for support, which is obtained by extending the first swinging leg set 10 downward.

By extending the first swinging leg set downward, a state in which only the first swinging leg set stands for support may be achieved. The first swinging leg set includes a first robotic thigh and a first robotic calf. The first robotic thigh and the first robotic calf are connected through sleeving. The mobile robot is controlled to stretch the first robotic thigh and/or the first robotic calf in a sleeving direction, so that the first swinging leg set can be extended downward.

**Operation 2704:** Control the mobile robot to stretch the second swinging leg set downward in the target standing state.

The second swinging leg set is an inner swinging leg set. By extending the second swinging leg set downward, a state in which only the second swinging leg set stands for support may be achieved. The second swinging leg set includes a second robotic thigh and a second robotic calf. The second robotic thigh and the second robotic calf are connected through sleeving. The mobile robot is controlled to stretch the second robotic thigh and/or the second robotic calf in a sleeving direction, so that the second swinging leg set can be extended downward.

**Operation 2705:** Control the mobile robot to rotate the first swinging leg set and/or the second swinging leg set about the hip rotation axis in the target standing state, until the first swinging leg set and the second swinging leg set are in a state of standing with legs crossed in a front-to-back direction.

Standing with legs crossed in a front-to-back direction means that a second included angle exists between an extending direction of the first swinging leg set and an extending direction of the second swinging leg set in a standing state (not in a parallel state). In some embodiments, with the robot standing with legs crossed in a front-to-back direction, the first swinging leg set is located before the second swinging leg set, or the first swinging leg set is located behind the second swinging leg set. Specifically, with the robot standing with legs crossed in a front-to-back direction, stop points of the first swinging leg set are located before stop points of the second swinging leg set, or the stop points of the first swinging leg set are located behind the stop points of the second swinging leg set.

With reference to FIG. 28, part (C2) of FIG. 28 shows a first swinging leg set 10 and a second swinging leg set 20 are in a state of standing with legs crossed in a front-to-back direction. In this case, the first swinging leg set 10 is located before the second swinging leg set 20, the first swinging leg set 10 is an outer swinging leg set, and the second swinging leg set 20 is an inner swinging leg set.

By rotating the first swinging leg set and/or the second swinging leg set about the hip rotation axis, a state in which the first swinging leg set and the second swinging leg set are in a state of standing with legs crossing.

Based on the above, a method for transforming from the target standing state to a plurality of random standing states is provided, thereby providing a complete unfolding process of the mobile robot.

Apparatus embodiments of this application are described below. For details not described in detail in the apparatus embodiments, reference may be made to the corresponding records in the above method embodiments, and the details are not described herein.

FIG. 29 is a structural block diagram of an apparatus for controlling a mobile robot according to an exemplary embodiment of this application. The mobile robot includes a first swinging leg set and a second swinging leg set. At least one of the first swinging leg set and the second swinging leg set includes a plurality of swinging legs. The first swinging leg set and the second swinging leg set are arranged side by side, and rotation axes of the first swinging leg set and the second swinging leg set are located on the same vertical plane. The apparatus includes:
a control module 2901, configured to control the mobile robot to be in an initial standing state,
the control module 2901 being further configured to control the mobile robot to transform from the initial standing state to a folded state characterized by the first swinging leg set and the second swinging leg set being positioned together horizontally.

In an exemplary embodiment, the control module 2901 is further configured to control the mobile robot to transform from the initial standing state to a horizontally split state, the horizontally split state including a state in which the first swinging leg set and the second swinging leg set are horizontally split; and control the mobile robot to transform from the horizontally split state to the folded state.

In an exemplary embodiment, the control module 2901 is further configured to control the mobile robot to perform a splitting action in the initial standing state, until the mobile robot is in the horizontally split state.

In an exemplary embodiment, the control module 2901 is further configured to control the first swinging leg set or the second swinging leg set of the mobile robot to perform a leg rotation action about the hip rotation axis until the first swinging leg set and the second swinging leg set are horizontally closed together.

In an exemplary embodiment, the robot further has a torso structure. The control module 2901 is further configured to control the torso structure to be in a sideway swinging state, the sideway swinging state meaning that a first included angle exists between an orientation of a front side of the torso structure and an extending direction of the first swinging leg set, and/or the sideway swinging state meaning that a second included angle exists between the orientation of the front side of the torso structure and an extending direction of the second swinging leg set.

In an exemplary embodiment, the robot further has a torso structure. The control module 2901 is further configured to control the torso structure to be in a bent state, the bent state meaning that a third included angle exists between a central axis of the torso structure and a gravity direction.

In an exemplary embodiment, the mobile robot further has a torso structure and a motion arm located on a peripheral side of the torso structure. The control module 2901 is further configured to control a motion arm to be in a first extended state, the first extended state being a state in which the motion arm extends in a direction of a support leg set, the support leg set including a swinging leg set that comes into contact with the reference plane when the leg rotation action is performed.

In an exemplary embodiment, the mobile robot further has a torso structure and a motion arm located on a peripheral side of the torso structure. The control module 2901 is further configured to: control the mobile robot to perform the splitting action in the initial standing state, until the mobile robot is in a first split state, the first split state being a critical state in which the motion arm is supported on a reference plane; and control the mobile robot to further perform the splitting action until the mobile robot is in the horizontally split state.

In an exemplary embodiment, the control module 2901 is further configured to: control the mobile robot to further perform the splitting action, and control the motion arm of the mobile robot to continuously contract until the mobile robot is in the horizontally split state.

In an exemplary embodiment, a first swinging leg includes a first leg and a first wheel located on an end of the first leg, and a second swinging leg includes a second leg and a second wheel located on an end of the second leg. A first protrusion is arranged at a root of the first leg, and a second protrusion is arranged at a root of the second leg. The control module 2901 is further configured to: determine a plurality of first wheels and a plurality of first protrusions respectively corresponding to the plurality of first swinging legs and a plurality of second wheels and a plurality of second protrusions respectively corresponding to the plurality of second swinging legs as a support portion of the mobile robot in the horizontally split state; and control the mobile robot to be in the horizontally split state.

In an exemplary embodiment, the mobile robot further includes the torso structure. The control module 2901 is further configured to: control the torso structure to perform a bending operation; control a front side or a back side of the torso structure to attach to a top side of the first swinging leg set; and control the front side or the back side of the torso structure to attach to a top side of the second swinging leg set.

In an exemplary embodiment, the initial standing state includes a state in which the first swinging leg set and the second swinging leg set are closed together and jointly stand for support. The control module 2901 is further configured to control the mobile robot to perform an action of stretching or retracting a first swinging leg set upward in a first standing state, the first standing state including a state in which the first swinging leg set and a second swinging leg set are closed together and only the first swinging leg set stands for support.

In an exemplary embodiment, the initial standing state includes a state in which the first swinging leg set and the second swinging leg set are closed together and jointly stand for support. The control module 2901 is further configured to control the mobile robot to perform an action of stretching or retracting a second swinging leg set upward in a second standing state, the second standing state including a state in which the first swinging leg set and the second swinging leg set are closed together and only the second swinging leg set stands for support.

In an exemplary embodiment, the initial standing state includes a state in which the first swinging leg set and the second swinging leg set are closed together and jointly stand for support. The control module 2901 is further configured to control the mobile robot to rotate the first swinging leg set and/or the second swinging leg set about the hip rotation axis in a third standing state, the third standing state including a state in which the first swinging leg set and the second swinging leg set stand with legs crossed in a front-to-back direction.

Based on the above, in the operating state, the first swinging leg set and the second swinging leg set of the mobile robot are arranged side by side. In a non-operating state, the first swinging leg set and the second swinging leg set of the mobile robot are horizontally closed together, so that a volume of the mobile robot in the non-operating state can be reduced.

FIG. 30 is a structural block diagram of an apparatus for controlling a mobile robot according to an exemplary embodiment of this application. The mobile robot includes a first swinging leg set and a second swinging leg set. At least one of the first swinging leg set and the second swinging leg set includes a plurality of swinging legs. The first swinging leg set and the second swinging leg set are arranged side by side, and rotation axes of the first swinging leg set and the second swinging leg set are located on the same vertical plane. The apparatus includes:
a control module 3001, configured to control the mobile robot to be in a folded state characterized by the first swinging leg set and the second swinging leg set being positioned together horizontally,
the control module 3001 being further configured to control the mobile robot to transform from the folded state into a target standing state.

In an exemplary embodiment, the control module 3001 is further configured to control the mobile robot to transform from the folded state to a horizontally split state, the horizontally split state including a state in which the first swinging leg set and the second swinging leg set are horizontally split; and control the mobile robot to transform from the horizontally split state to a target standing state.

In an exemplary embodiment, the control module 3001 is further configured to control the first swinging leg set or the second swinging leg set of the mobile robot to perform a leg rotation action about a hip rotation axis until the first swinging leg set and the second swinging leg set are horizontally split.

In an exemplary embodiment, the mobile robot further has the torso structure. The control module 3001 is further configured to control the torso structure to be in a sideway swinging state, the sideway swinging state meaning that a first included angle exists between an orientation of a front side of the torso structure and an extending direction of the first swinging leg set, and/or the sideway swinging state meaning that a second included angle exists between the orientation of the front side of the torso structure and an extending direction of the second swinging leg set.

In an exemplary embodiment, the mobile robot further has the torso structure. The control module 3001 is further configured to control the torso structure to be in a bent state, the bent state meaning that a third included angle exists between a central axis of the torso structure and a gravity direction.

In an exemplary embodiment, the mobile robot further has a torso structure and a motion arm located on a peripheral side of the torso structure. The control module 3001 is further configured to control the motion arm to be in a first extended state, the first extended state being a state in which the motion arm extends in a direction of a support leg set, the support leg set including a swinging leg set that comes into contact with a reference plane when a leg rotation action is performed.

In an exemplary embodiment, the control module 3001 is further configured to control the mobile robot to perform a stand-up action in the horizontally split state until the mobile robot is in the target standing state.

In an exemplary embodiment, the mobile robot further has a torso structure and a motion arm located on a peripheral side of the torso structure. The control module 3001 is further configured to: control the motion arm to be supported on a reference plane in the horizontally split state, and control the mobile robot to perform the stand-up action until the mobile robot is in a first split state, the first split state being a critical state in which the motion arm is supported on the reference plane; and control the mobile robot to further perform the stand-up action until the mobile robot is in the target standing state.

In an exemplary embodiment, the control module 3001 is further configured to: control the motion arm to be supported on the reference plane in the horizontally split state, control the motion arm to continuously extend, and control the mobile robot to perform the stand-up action until the mobile robot is in the first split state.

In an exemplary embodiment, a first swinging leg includes a first leg and a first wheel located on an end of the first leg, and a second swinging leg includes a second leg and a second wheel located on an end of the second leg. A first protrusion is arranged at a root of the first leg, and a second protrusion is arranged at a root of the second leg. The control module 3001 is further configured to: determine a plurality of first wheels and a plurality of first protrusions respectively corresponding to the plurality of first swinging legs and a plurality of second wheels and a plurality of second protrusions respectively corresponding to the plurality of second swinging legs as a support portion of the mobile robot in the horizontally split state; and control the mobile robot to be in the horizontally split state.

In an exemplary embodiment, the mobile robot further includes a torso structure. The control module 3001 is further configured to: control a front side or a back side of the torso structure to attach to a top side of the first swinging leg set; and/or control the front side or the back side of the torso structure to attach to a top side of the second swinging leg set; and control the torso structure to perform a sit-up operation.

In an exemplary embodiment, the target standing state includes a state in which the first swinging leg set and the second swinging leg set are closed together and jointly stand for support. The control module 3001 is further configured to: control the mobile robot to stretch the first swinging leg set downward in the target standing state; or control the mobile robot to stretch the second swinging leg set downward in the target standing state.

In an exemplary embodiment, the target standing state includes a state in which the first swinging leg set and the second swinging leg set are closed together and jointly stand for support. The control module 3001 is further configured to control the mobile robot to rotate the first swinging leg set and/or the second swinging leg set about the hip rotation axis in the target standing state, until the first swinging leg set and the second swinging leg set are in a state of standing with legs crossed in a front-to-back direction.

Based on the above, in the operating state, the first swinging leg set and the second swinging leg set of the mobile robot are arranged side by side. In a non-operating state, the first swinging leg set and the second swinging leg set of the mobile robot are horizontally closed together, so that a volume of the mobile robot in the non-operating state can be reduced.

FIG. 31 is a structural block diagram of a mobile robot according to an exemplary embodiment of this application. The mobile robot includes a controller 3101 and a memory 3102.

The controller 3101 may include one or more processing cores, such as a 4-core processor and an 8-core processor. The controller 3101 may be implemented in at least one hardware form of a digital signal processor (DSP), a field-programmable gate array (FPGA), and a programmable logic array (PLA). The controller 3101 may alternatively include a main processor and a coprocessor. The main processor is configured to process data in a wake-up state, which is also referred to as a central processing unit (CPU). The coprocessor is a low-power processor configured to process data in a standby state. In some embodiments, the processor 3101 may have a graphics processing unit (GPU) integrated therein. The GPU is configured to render and draw content that needs to be displayed on a display screen. In some embodiments, the controller 3101 may further include an artificial intelligence (AI) processor. The AI processor is configured to perform computing operations related to machine learning. The memory 3102 may include one or more computer-readable storage media. The computer-readable storage medium may be non-transient. The memory 3102 may further include a high-speed random access memory and a nonvolatile memory, for example, one or more disk storage devices or flash storage devices. In some embodiments, the non-transient computer-readable storage medium in the memory 3102 is configured to store at least one instruction. The at least one instruction is executed by the controller 3101 to implement the method for controlling a mobile robot provided in the method embodiments in this application.

In some embodiments, the mobile robot may alternatively include at least one motor 3103 and at least one sensor 3104. The at least one motor 3103 is configured to receive a control instruction transmitted by the controller 3101, and drive the mobile robot to perform actions. The at least one motor 3103 drives each joint of the mobile robot to perform actions such as rotation/stretching or retracting/fixing. The at least one sensor 3104 is configured to obtain state information of the mobile robot. The state information includes an internal state of the mobile robot and/or an external state (environment information) of the mobile robot. The at least one sensor 3104 transmits the status information of the mobile robot to the controller 3101, to control the mobile robot to perform related actions.

A person skilled in the art may understand that the structure shown in FIG. 31 constitutes no limitation on the mobile robot, and may include more or fewer assemblies than illustrated, or combine some assemblies, or adopt different assembly arrangements.

An embodiment of this application further provides a mobile robot. The mobile robot includes a memory and a processor. The memory has at least one piece of program code stored therein, the program code is loaded and executed by the processor, to implement the foregoing method for controlling a mobile robot.

An embodiment of this application further provides a computer-readable storage medium, having a computer program stored therein, the computer program being executed by a processor to implement the foregoing method for controlling a mobile robot.

An embodiment of this application further provides a chip, including a programmable logic circuit and/or program instructions, the chip, when run, being configured to implement the foregoing method for controlling a mobile robot.

An embodiment of this application further provides a computer program product or a computer program, the computer program product or the computer program including computer instructions stored in a computer-readable storage medium, a processor reading the computer instructions from the computer-readable storage medium and executing the computer instructions, to implement the foregoing method for controlling a mobile robot.

## Claims

1. A method for controlling a mobile robot, wherein the mobile robot comprises a first swinging leg set and a second swinging leg set, at least one of the first swinging leg set and the second swinging leg set comprising a plurality of swinging legs, the first swinging leg set and the second swinging leg set being arranged side by side, a rotation axis of the first swinging leg set and a rotation axis of the second swinging leg set being located on the same vertical plane, the method being performed by a controller of the mobile robot, and the method comprising:
controlling the mobile robot to be in an initial standing state; and
controlling the mobile robot to transform from the initial standing state to a folded state **characterized by** the first swinging leg set and the second swinging leg set being positioned together horizontally.

2. The method according to claim 1, wherein the controlling the mobile robot to transform from the initial standing state to a folded state comprises:
controlling the mobile robot to transform from the initial standing state to a horizontally split state, in which the first swinging leg set and the second swinging leg set are horizontally split from each other; and
controlling the mobile robot to transform from the horizontally split state to the folded state.

3. The method according to claim 2, wherein the controlling the mobile robot to transform from the initial standing state to a horizontally split state comprises:
controlling the mobile robot to perform a splitting action in the initial standing state, until the mobile robot is in the horizontally split state.

4. The method according to claim 3, wherein the mobile robot further has a torso structure and a motion arm located on a peripheral side of the torso structure; and the controlling the mobile robot to perform a splitting action in the initial standing state, until the mobile robot is in the horizontally split state comprises:
controlling the mobile robot to perform the splitting action in the initial standing state, until the mobile robot is in a first split state, the first split state being a critical state in which the motion arm is supported on a reference plane; and
controlling the mobile robot to further perform the splitting action until the mobile robot is in the horizontally split state.

5. The method according to claim 4, wherein the controlling the mobile robot to further perform the splitting action until the mobile robot is in the horizontally split state comprises:
controlling the mobile robot to further perform the splitting action, and controlling the motion arm of the mobile robot to continuously contract until the mobile robot is in the horizontally split state.

6. The method according to claim 2, wherein the controlling the mobile robot to transform from the horizontally split state to the folded state comprises:
controlling the first swinging leg set or the second swinging leg set of the mobile robot to perform a leg rotation action about a hip rotation axis until the first swinging leg set and the second swinging leg set are horizontally closed together.

7. The method according to claim 6, wherein the mobile robot further has a torso structure, and the method further comprises:
controlling the torso structure to be in a sideway swinging state,
the sideway swinging state indicating that a first included angle exists between an orientation of a front side of the torso structure and an extending direction of the first swinging leg set; or
the sideway swinging state indicating that a second included angle exists between the orientation of the front side of the torso structure and an extending direction of the second swinging leg set; or
the sideway swinging state indicating that the first included angle exists between the orientation of the front side of the torso structure and the extending direction of the first swinging leg set and the second included angle exists between the orientation of the front side of the torso structure and the extending direction of the second swinging leg set.

8. The method according to claim 6, wherein the mobile robot further has a torso structure, and the method further comprises:
controlling the torso structure to be in a bent state, the bent state indicating that a third included angle exists between a central axis of the torso structure and a gravity direction.

9. The method according to claim 6, wherein the mobile robot further has a torso structure and a motion arm located on a peripheral side of the torso structure; and the method further comprises:
controlling the motion arm to be in a first extended state, the first extended state being a state in which the motion arm extends in a direction of a support leg set, the support leg set comprising a swinging leg set that comes into contact with a reference plane when the leg rotation action is performed.

10. The method according to any one of claims 6 to 9, wherein the mobile robot further has a torso structure, and the method further comprises:
controlling the torso structure to perform a bending operation; and
controlling a front side or a back side of the torso structure to attach to a top side of the first swinging leg set; or controlling the front side or the back side of the torso structure to attach to a top side of the second swinging leg set; or controlling the front side or the back side of the torso structure to attach to both the top side of the first swinging leg set and the top side of the second swinging leg set.

11. A method for controlling a mobile robot, wherein the mobile robot comprises a first swinging leg set and a second swinging leg set, at least one of the first swinging leg set and the second swinging leg set comprising a plurality of swinging legs, the first swinging leg set and the second swinging leg set being arranged side by side, a rotation axis of the first swinging leg set and a rotation axis of the second swinging leg set being located on the same vertical plane, the method being performed by a controller of the mobile robot, and the method comprising:
controlling the mobile robot to be in a folded state **characterized by** the first swinging leg set and the second swinging leg set being positioned together horizontally; and
controlling the mobile robot to transform from the folded state to a target standing state.

12. The method according to claim 11, wherein the controlling the mobile robot to transform from the folded state to a target standing state comprises:
controlling the mobile robot to transform from the folded state to a horizontally split state, in which the first swinging leg set and the second swinging leg set are horizontally split from each other; and
controlling the mobile robot to transform from the horizontally split state to the target standing state.

13. The method according to claim 12, wherein the controlling the mobile robot to transform from the folded state to a horizontally split state comprises:
controlling the first swinging leg set or the second swinging leg set of the mobile robot to perform a leg rotation action about a hip rotation axis until the first swinging leg set and the second swinging leg set are horizontally split.

14. The method according to claim 13, wherein the mobile robot further has a torso structure, and the method further comprises:
controlling the torso structure to be in a sideway swinging state,
the sideway swinging state indicating that a first included angle exists between an orientation of a front side of the torso structure and an extending direction of the first swinging leg set; or
the sideway swinging state indicating that a second included angle exists between the orientation of the front side of the torso structure and an extending direction of the second swinging leg set; or
the sideway swinging state indicating that the first included angle exists between the orientation of the front side of the torso structure and the extending direction of the first swinging leg set and the second included angle exists between the orientation of the front side of the torso structure and the extending direction of the second swinging leg set.

15. The method according to claim 13, wherein the mobile robot further has a torso structure, and the method further comprises:
controlling the torso structure to be in a bent state, the bent state indicating that a third included angle exists between a central axis of the torso structure and a gravity direction.

16. The method according to claim 13, wherein the mobile robot further has a torso structure and a motion arm located on a peripheral side of the torso structure; and the method further comprises:
controlling the motion arm to be in a first extended state, in which the motion arm extends in a direction of a support leg set, the support leg set comprising a swinging leg set that comes into contact with a reference plane when the leg rotation action is performed.

17. The method according to claim 12, wherein the controlling the mobile robot to transform from the horizontally split state to the target standing state comprises:
controlling the mobile robot to perform a stand-up action in the horizontally split state, until the mobile robot is in the target standing state.

18. The method according to claim 17, wherein the mobile robot further has a torso structure and a motion arm located on a peripheral side of the torso structure; and the controlling the mobile robot to perform a stand-up action in the horizontally split state, until the mobile robot is in the target standing state comprises:
controlling the motion arm to be supported on a reference plane in the horizontally split state, and controlling the mobile robot to perform the stand-up action until the mobile robot is in a first split state, in which the motion arm is supported on the reference plane; and
controlling the mobile robot to further perform the stand-up action until the mobile robot is in the target standing state.

19. The method according to claim 18, wherein the controlling the motion arm to be supported on a reference plane in the horizontally split state, and controlling the mobile robot to perform the stand-up action until the mobile robot is in a first split state comprises:
controlling the motion arm to be supported on the reference plane in the horizontally split state, controlling the motion arm to continuously extend, and controlling the mobile robot to perform the stand-up action until the mobile robot is in the first split state.

20. The method according to any one of claims 11 to 13, wherein the mobile robot further comprises a torso structure, and the method further comprises:
controlling a front side or a back side of the torso structure to attach to a top side of the first swinging leg set; or controlling the front side or the back side of the torso structure to attach to a top side of the second swinging leg set; or controlling the front side or the back side of the torso structure to attach to both the top side of the first swinging leg set and the top side of the second swinging leg set; and
controlling the torso structure to perform a sit-up operation.

21. An apparatus for controlling a mobile robot, wherein the mobile robot comprises a first swinging leg set and a second swinging leg set, at least one of the first swinging leg set and the second swinging leg set comprising a plurality of swinging legs, the first swinging leg set and the second swinging leg set being arranged side by side, a rotation axis of the first swinging leg set and a rotation axis of the second swinging leg set being located on the same vertical plane, and the apparatus comprising:
a control module, configured to control the mobile robot to be in an initial standing state,
the control module being further configured to control the mobile robot to transform from the initial standing state to a folded state **characterized by** the first swinging leg set and the second swinging leg set being positioned together horizontally.

22. An apparatus for controlling a mobile robot, wherein the mobile robot comprises a first swinging leg set and a second swinging leg set, at least one of the first swinging leg set and the second swinging leg set comprising a plurality of swinging legs, the first swinging leg set and the second swinging leg set being arranged side by side, a rotation axis of the first swinging leg set and a rotation axis of the second swinging leg set being located on the same vertical plane, and the apparatus comprising:
a control module, configured to control the mobile robot to be in a folded state **characterized by** the first swinging leg set and the second swinging leg set being positioned together horizontally; and
the control module being further configured to control the mobile robot to transform from the folded state into a target standing state.

23. A mobile robot, comprising a memory and a processor,
the memory having at least one piece of program code stored therein, the program code being loaded and executed by the processor, to implement the method for controlling a mobile robot according to any one of claims 1 to 20.

24. A computer-readable storage medium, having a computer program stored therein, the computer program being configured to be executed by a processor to implement the method for controlling a mobile robot according to any one of claims 1 to 20.

25. A chip, comprising at least one of a programmable logic circuit and program instructions, an electronic device having the chip installed therein, when running, being configured to implement the method for controlling a mobile robot according to any one of claims 1 to 20.
